(19) Europäisches Patentamt / European Patent Office / Office européen des brevets

(11) **EP 2 384 082 B1**

(12) **FASCICULE DE BREVET EUROPEEN**

(45) Date de publication et mention de la délivrance du brevet:
**17.08.2016 Bulletin 2016/33**

(51) Int Cl.:
**H04W 88/18** *(2009.01)*    **H04W 16/18** *(2009.01)*

(21) Numéro de dépôt: **11305500.8**

(22) Date de dépôt: **28.04.2011**

(54) **Procédé et dispositif de configuration d'un réseau de capteurs sans fils**

Verfahren und Vorrichtung zur Konfiguration eines kabellosen Sensornetzes

Method and device for configuring a network of remote wireless sensors

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.04.2010 FR 1001869**

(43) Date de publication de la demande:
**02.11.2011 Bulletin 2011/44**

(73) Titulaire: **Thales**
**92200 Neuilly Sur Seine (FR)**

(72) Inventeurs:
- **Leguay, Jérémie**
  **92704, COLOMBES Cedex (FR)**
- **Gay, Vincent**
  **92704, COLOMBES Cedex (FR)**
- **Lopez-Ramos, Mario**
  **92704, COLOMBES Cedex (FR)**
- **Medagliani, Paolo**
  **26042, CINGIA DE'BOTTI (CR) (IT)**
- **Ferrari, GianLuigi**
  **43124, PARMA (IT)**

(74) Mandataire: **Lavoix**
**2, place d'Estienne d'Orves**
**75441 Paris Cedex 09 (FR)**

(56) Documents cités:
- **MEDAGLIANI P ET AL: "Engineering Energy-Efficient Target Detection Applications in Wireless Sensor Networks", LARGE-SCALE CONTEXT MANAGEMENT, IEEE, US, 29 mars 2010 (2010-03-29), pages 31-39, XP007915674, ISBN: 978-1-4244-5328-3**
- **KAPLAN L M: "Node selection for target tracking using bearing measurements from unattended ground sensors", AEROSPACE CONFERENCE, 2003. PROCEEDINGS. 2003 IEEE MARCH 8-15, 2003, PISCATAWAY, NJ, USA,IEEE, vol. 5, 8 mars 2003 (2003-03-08), pages 5_2137-5_2152, XP010660508, ISBN: 978-0-7803-7651-9**
- **"Decentralized Management of Sensors in a Multi-Attribute Environment Under Weak Network Congestion", ACOUSTICS, SPEECH AND SIGNAL PROCESSING, 2006. ICASSP 2006 PROCEEDINGS . 2006 IEEE INTERNATIONAL CONFERENCE ON TOULOUSE, FRANCE 14-19 MAY 2006, PISCATAWAY, NJ, USA,IEEE, PISCATAWAY, NJ, USA, 1 janvier 2006 (2006-01-01), pages IV-IV, XP031101375, ISBN: 978-1-4244-0469-8**

**Description**

La présente invention concerne un procédé de configuration d'un réseau de capteurs sans fils déposés, du type constitué de noeuds interconnectés comportant chacun un capteur, une source propre d'alimentation en énergie, des moyens de calcul, des moyens de communication, des moyens de sauvegarde d'une configuration de fonctionnement et des moyens de gestion de son fonctionnement en fonction de cette configuration mémorisée.

Les Réseaux de Capteurs Sans-fil Déposés, désignés RCSD dans la suite (en anglais « UGS networks » - Unattended Ground Sensor networks), sont destinés à détecter une intrusion dans une zone à surveiller et à prévenir de cette intrusion après détection. Ils sont composés de dispositifs autonomes formant des noeuds qui possèdent une alimentation autonome en énergie, des capacités de communication radio, des capacités d'observation (via l'utilisation de transducteurs ou de modules plus complexes), et des capacités de calcul (plus ou moins élevées).

Ces noeuds sont mis en réseau en utilisant le plus souvent des fonctions d'auto organisation à la manière des réseaux dits « ad hoc ». Dans ce cas, puisque la communication n'est a priori possible qu'entre les noeuds en portée radio, un protocole de routage (par exemple Direct Diffusion) assure alors le relai des paquets de données pour assurer la connectivité de bout en bout lorsque la topologie du réseau le permet.

Dans les RCSD, les noeuds sont déposés (par exemple largage par un avion, dépose par un opérateur à pied) à une localisation ou dans une zone géographique donnée afin d'accomplir une fonction de surveillance. Les capteurs déposés surveillent de manière collaborative (ou non) les activités d'intérêt (par exemple, intrusions) dans la zone où ils opèrent, puis remontent des alertes vers des noeuds dits « passerelles » (gateway, en anglais) afin qu'elles soient transmises vers d'autres parties du système de surveillance (par exemple centre de commande et contrôle, autres capteurs, actuateurs).

Les RCSD ont des applications militaires dans le cadre de missions de surveillance, mais aussi civiles pour la surveillance d'infrastructures critiques (par exemple usines classifiées, ponts) ou pour la surveillance environnementale (par exemple risque sismique, agriculture, écologie).

Les noeuds RCSD ont en général des contraintes d'alimentation en énergie. Dans la majorité de cas, ils opèrent sur batterie. Pour économiser la batterie, ils sont équipés de mécanisme de mise en veille par intermittence des capteurs de mesure et des moyens de transmission.

L'opérateur doit alors, lors du déploiement ou en cours d'opération, décider d'un certain nombre de paramètres du système à savoir :

•    L'emplacement de chaque noeud, qui a une influence sur la performance en termes de détection.

•    La durée pendant laquelle et le nombre de fois qu'un capteur observe un phénomène qui a une influence sur la consommation énergétique du capteur et, plus globalement, un impact global sur la durée du vie du système et sur la dégradation dans le temps de ses performances de détection.

•    La durée pendant laquelle et le nombre de fois qu'un capteur active son interface de communication sans-fil pour recevoir ou envoyer des informations a un impact sur la durée de vie du capteur et sur les performances réseaux, en termes de délai de transmission notamment.

Le choix des paramètres du système influence fortement ses performances.

Par exemple les indicateurs de performances suivants sont définis :

•    $P_{md}$ (Probabilité de non-détection ou en anglais - Probability of miss-detection): Il s'agit de la probabilité que le réseau ne détecte pas un événement (par exemple arrivée d'une cible ou d'un phénomène) sachant qu'il est en train de se produire. Cette probabilité dépend par exemple du niveau de vigilance des noeuds (par exemple fréquence d'échantillonnage du signal sismique), de leur position géographique, de la capacité des capteurs à corréler de manière collaborative leurs observations.

•    Far (Taux de fausses alarmes ou en anglais - False alarm rate) : Il s'agit du nombre de fois par unité de temps que le système remontre des alarmes relatives à des événements inintéressants. Par exempte, si le système remonte une alarme disant qu'un piéton vient de s'introduire dans la zone alors qu'il s'agit d'un gibier. Des techniques de classification (pouvant être distribuées) sont généralement utilisées pour « désambiguïser » les alarmes.

•    D (Délais de transmission de l'alerte) : il s'agit du délai de transmission de l'alerte vers le noeud passerelle. Ce délai dépend en général du protocole MAC (Medium Access Control) et du routage utilisé ainsi que des paramètres associés.

- L (Durée de vie du système ou en anglais - Lifetime) : cet indicateur donne le temps pendant lequel le système est considéré comme opérationnel. Il peut être calculé de différentes manières, par exemple : durée jusqu'à ce qu'au moins un capteur manque d'énergie pour fonctionner.

Dans les RCSD, l'opérationnel en charge de sa configuration et de son déploiement doit donc décider des paramètres système correspondant à un point de fonctionnement donné (par exemple Pmd < 10%, 10 noeuds déployés). Ce problème est difficile et nécessite une forte compréhension des compromis rencontrés par le système, ceux-ci étant fortement liés aux protocoles choisis, aux comportements des modules matériel, etc.

Dans T. He, S. Krishnamurthy, L. Luo, T. Yan, L. Gu, R. Stoleru, G. Zhou, Q. Cao, P. Vicaire, J. A. Stankovic, T. F. Abdelzaher, J. Hui, and B. Krogh, "Vigilnet: An integrated sensor network system for energy-efficient surveillance," ACM Trans. Sen. Netw., vol. 2, no. 1, pp. 1-38, February 2006, les auteurs présentent la conception et la mise en oeuvre d'un système de surveillance, dénommé VigilNet, basé sur un RCSD. Les auteurs mettent en évidence les compromis qu'un tel système rencontre dans le cadre de l'utilisation de cycles d'endormissement (duty-cycles en anglais). Dans une extension des travaux précédents, J. Jeong, Y. Gu, T. He, and D. Du, "VISA: Virtual Scanning Algorithm for Dynamic Protection of Road Networks," in Proc. of 28th IEEE Conférence on Computer Communications (INFOCOM 09), Rio de Janeiro, Brazil, April 2009, propose de détecter le passage de véhicules le long d'une route. Chaque capteur réalise périodiquement une détection. La stratégie proposée consiste à définir un ordonnancement de ces périodes de détection sous la forme d'un balayage périodique sur toute la longueur du segment de route surveillé.

Dans L. Lazos, R. Poovendran, and J. A. Ritcey, "Analytic evaluation of target détection in heterogeneous wireless sensor networks," ACM Trans. Sensor Networks, vol. 5, no. 2, pp. 1-38, March 2009 noté [Lazos09], les auteurs considèrent un RCSD dans lequel : (1) les capteurs observent de manière permanente l'apparition de la cible dans leur zone de couverture, (2) les cibles ont une incidence quelconque mais une trajectoire rectiligne. Les auteurs proposent d'utiliser la géométrie analytique par intégration afin de calculer la probabilité de détection de ces cibles par au moins un capteur dans le cadre d'un déploiement soit déterministe (i.e., connaissant les positions des capteurs), soit stochastique (i.e, connaissant uniquement le nombre de capteurs). Dans le cas stochastique, une espérance mathématique exacte est trouvée pour la probabilité de non-détection. Dans le cas déterministe, les auteurs donnent une formulation des bornes inférieure et supérieure qui ne prend pas en compte l'existence de cycles d'activation/endormissement des modules de mesure et/ou communication.

Dans P. Medagliani, J. Leguay, V. Gay, M. Lopez Ramos, G. Ferrari. Engineering Energy-Efficient Target Detection Applications in Wireless Sensor Networks. Conference IEEE Percom. 2010 (Mannheim, Germany, March 2010) désigné dans la suite par [Meda09], les auteurs considèrent le cas d'un déploiement stochastique et étendent le travail de L. Lazos, R. Poovendran, and J. A. Ritcey, "Analytic evaluation of target détection in heterogeneous wireless sensor networks," ACM Trans. Sensor Networks, vol. 5, no. 2, pp. 1-38, March 2009, en intégrant le fait que les capteurs puissent réaliser leurs observations de manière périodique (et non de manière permanente) afin de réduire leur consommation énergétique. Les auteurs proposent également une modélisation du délai de transmission des alertes en considérant le cas du protocole X-MAC, qui utilise également des activations/désactivations périodiques de l'interface de communication pour réduire la consommation énergétique. Enfin, ce travail comprend un modèle de la consommation énergétique d'un réseau de capteurs, permettant de déduire de manière plus globale la durée de vie du réseau en fonction de l'énergie restante et du niveau d'activités/vigilance du réseau RCSD. Les auteurs montrent l'utilisation de ce cadre analytique à l'aide de techniques d'optimisation multi objectifs. Ceci permet à l'opérateur de visualiser les performances globales du système en fonction de ses contraintes (par exemple durée de vie, performance de détection). L'opérateur peut ainsi percevoir les compromis auxquels il doit faire face et décider de la configuration qu'il souhaite adopter. L'outil proposé est utilisé pour un nombre de noeuds fixe, déployés de manière aléatoire.

Dans J.J. Sylvester, "On a funicular solution of Buffon's "problem of the needle" in its most general form," Acta Mathematica, vol. 14, no. 1, pp. 185-205, 1890., Sylvester adresse le problème géométrique dit « de l'aiguille » : Un plan est strié de droites parallèles espacées d'une distance. On lance au hasard une aiguille de longueur /. Avec quelle probabilité l'aiguille coupe-t-elle une des droites ? La résolution de ce problème par Sylvester permet de raffiner analytiquement la borne supérieure donnée par L. Lazos, R. Poovendran, and J. A. Ritcey, "Analytic evaluation of target detection in heterogeneous wireless sensor networks," ACM Trans. Sensor Networks, vol. 5, no. 2, pp. 1-38, March 2009, pour la probabilité de non-détection dans le cas déterministe.

Le cadre analytique proposé dans [Meda09] permet de modéliser un système RCSD dans le cadre d'un déploiement stochastique. D'un point de vu opérationnel, les opérateurs peuvent manipuler ce modèle en utilisant des outils d'optimisation pour observer l'espace des configurations optimales en fonction des objectifs et contraintes définis par l'opérateur lui-même. Ceci permet de comprendre les compromis sous-jacents au fonctionnement du système. Les contraintes et objectifs peuvent être par exemple de maximisation des performances de détection sous réserve de contraintes sur les délais de transmission des alertes.

Ce modèle et l'outillage ne fournissent pas de résultats spécifiques à un déploiement donné de capteurs (cas plus intéressant pour les opérateurs de RCSD). Ils fournissent des résultats moyens (au sens mathématique) devant être utilisés à titre indicatif par les opérateurs afin de décider du paramétrage de leur réseau. Par ailleurs ils ne permettent pas d'aider l'opérateur à placer les noeuds dans une zone géographique particulière. Enfin, il n'existe pas d'outil permettant à l'opérateur de connaître le nombre minimal de noeuds requis pour satisfaire les contraintes et objectifs opérationnels à remplir.

Les méthodes de l'état de la technique ne permettent pas d'assister les opérateurs de RCSD pour le placement des noeuds et la configuration des paramètres du système dans le cadre de contextes opérationnels particuliers du type surveillance de camp/zone.

Par ailleurs, les méthodes de l'état de la technique ne permettent pas de déterminer le nombre minimum de noeuds requis sur un ensemble de zones distinctes à surveiller, chacune ayant des contraintes et objectifs opérationnels particuliers.

L'invention a pour but de proposer un procédé et un dispositif de configuration d'un réseau de capteurs sans fils déposés dans un ou plusieurs zones géographiques qui permettent de déterminer le nombre et la position des capteurs pour atteindre des performances, répondant à des critères de performance cibles.

A cet effet, l'invention a pour objet un procédé de configuration d'un réseau de capteurs sans fils déposés du type précité, caractérisé en ce qu'il comporte les étapes suivantes :

> 1. Définir des critères de performance constituant des contraintes, avec des valeurs seuil associées, et au moins un critère de performance à optimiser, pour au moins une zone à équiper de noeuds, chaque critère de performance étant défini par un modèle
> 2. Définir pour la ou chaque zone :
>> a. Des caractéristiques de la zone
>> b. Des caractéristiques des capteurs dans la zone
>
> 3. Allouer à la ou chaque zone à équiper, un nombre de noeuds
> 4. Appliquer un processus d'optimisation par zone sur la ou chaque zone, le processus d'optimisation par zone mettant en oeuvre les étapes suivantes :
>> a. Déterminer la position des noeuds dans la zone si il existe pour satisfaire un critère d'optimisation prédéterminé ;
>> b. Déterminer un point de fonctionnement si il existe, caractérisant le comportement du réseau de capteurs dans la zone, et
>> c. Déterminer la configuration du réseau de capteurs dans la zone si elle existe, définissant les paramètres de configuration du réseau de capteurs, et
>> d. Déterminer le besoin éventuel d'utiliser davantage de noeuds ou réviser les critères de performance définis à l'étape 1,
>
> 5. Augmenter le nombre de noeuds ou modifier les critères de performance définis dans la ou chaque zone où les critères de performance ne sont pas satisfaits et reproduire dans ces zones le processus d'optimisation par zone avec le nouveau nombre de noeuds ou les nouveaux critères de performance, et
> 6. Appliquer la configuration déterminée à chaque noeud dans la ou chaque zone.

Suivant des modes particuliers de réalisation, le procédé comporte l'une ou plusieurs des caractéristiques suivantes :

- l'étape de définition des critères de performance à optimiser comprend la définition d'une valeur seuil à atteindre pour au moins un critère de performance à optimiser, et le processus d'optimisation par zone comporte une étape d'incrémentions du nombre de noeuds pour équiper la zone, si au moins un critère de performance à optimiser n'est pas satisfait afin de déterminer le nombre minimal de noeuds requis pour satisfaire les critères de performance et une reproduction des étapes 4a à 4c avec le nouveau nombre de noeuds incrémenté. ;
- l'étape de définition des critères de performance à optimiser comprend la définition d'une valeur seuil à atteindre pour au moins un critère de performance à optimiser, et le processus d'optimisation par zone comporte une étape de décrémentation du nombre de noeuds pour équiper la zone, si tous les critères de performance à optimiser sont satisfaits afin de déterminer le nombre minimal de noeuds requis pour satisfaire les critères de performance et une reproduction des étapes 4a à 4c avec le nouveau nombre de noeuds décrémenté ;
- l'étape de définition des caractéristiques de la zone comprend la définition d'une valeur minimale pour la dimension de la zone, et le processus d'optimisation par zone comporte des étapes successives d'incrémentation de la dimension de la zone et de reproduction des étapes 4a à 4c avec la nouvelle dimension de la zone, jusqu'à ce qu'il n'existe aucun point de fonctionnement satisfaisant les critères de performances contraintes constituant des contraintes ;

- le critère d'optimisation prédéterminé, pour la détermination de la position des noeuds, est de minimiser une probabilité de non détection par le réseau sous l'hypothèse d'une activation permanente du capteur de chaque noeud ;
- l'étape d'allocation des noeuds comprend, dans au une zone, la fixation de positions imposées pour au moins un noeud dans la zone et l'étape de détermination de la position des noeuds prend en compte les positions imposées pour au moins ledit noeud ; et
- le procédé comporte, une modélisation analytique de la probabilité de non-détection d'une cible mettant en oeuvre les positions connues des capteurs.

L'invention a pour objet un dispositif de configuration d'un réseau de capteurs sans fils déposés du type précité, comportant des moyens de mise en oeuvre des étapes du procédé tel que défini ci-dessus.

L'invention a également pour objet un programme d'ordinateur comportant des instructions propres mettant en oeuvre le procédé tel que défini ci-dessus, lorsque mis en oeuvre sur ordinateur.

L'invention sera mieux comprise à la lecture de la description qui va suivre, donnée uniquement à titre d'exemple et faite en se référant aux dessins sur lesquels :

- la figure 1 est un schéma illustrant un réseau de capteurs sans fils déposés protégeant un camp ;
- la figure 2 est une vue schématique du dispositif mettant en oeuvre le procédé de configuration selon l'invention ;
- la figure 3 est un organigramme du procédé général selon l'invention pour un exemple de mise en oeuvre sur 3 zones géographiques
- la figure 4 est un schéma d'un exemple des résultats successifs du procédé général selon l'invention ;
- la figure 5 est un organigramme d'une sous-procédure mise en oeuvre dans le procédé selon l'invention illustrée sur la figure 3 ;
- la figure 6 est un graphique montrant un espace de solutions satisfaisant les critères de performance dans le cadre de la mise en oeuvre d'une sous-procédure mise en oeuvre dans le procédé selon l'invention ;
- la figure 7 est un schéma d'un exemple des résultats successifs de la sous-procédure décrite en regard de la figure 5 ;
- la figure 8 est une vue schématique de la plage de couverture d'un noeud du réseau de capteurs ;
- la figure 9 est un schéma illustrant les cycles d'endormissement d'un module d'un noeud ;
- les figures 10, 11 et 12 sont des vues schématique des plages de couverture de deux noeuds illustrant différents calculs mis en oeuvre dans le procédé ; et
- la figure 13 est un vue illustrant le déploiement de capteurs dans une zone.

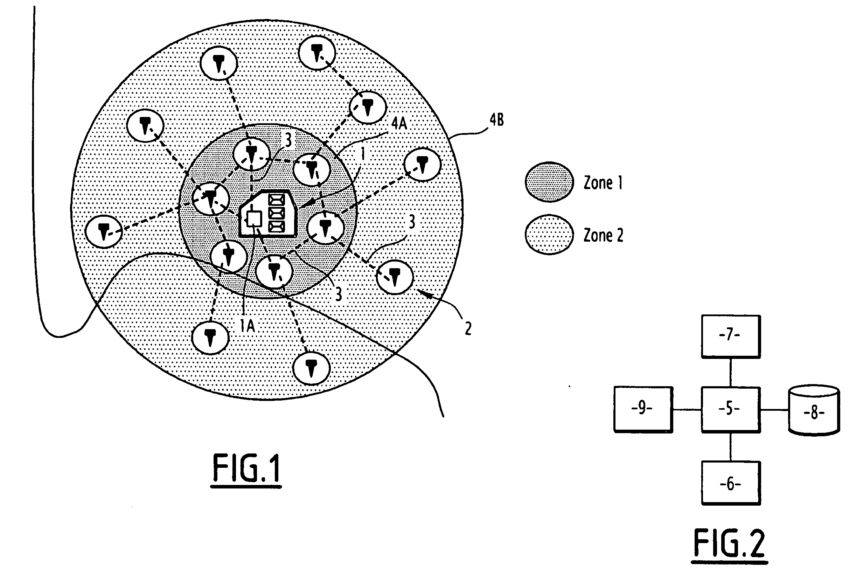

Sur la figure 1 est représenté vue de dessus terrain devant être protégé. Au centre se trouve un campement 1 équipé d'un terminal de surveillance 1A vers lequel les éventuelles alarmes de détection d'intrusions sont remontées par un réseau de capteurs sans fils déposés désigné par RCSD dans la suite.

Ce réseau comporte un ensemble de noeuds 2 interconnectés par des liaisons sans fils 3 reliant de manière directe ou indirecte les noeuds au terminal de surveillance 1A. Les liaisons indirectes se font comme connu en soi au travers d'autres noeuds intermédiaires.

Les noeuds 2 correspondent chacun à un capteur du réseau. Ils comportent chacun par exemple un capteur sismique permettant de détecter une vibration du sol dans son champ d'action lorsqu'une personne ou un véhicule y pénètre. Chacun des noeuds possède outre son propre capteur, une source propre d'alimentation en énergie, ses moyens de communication avec les autres noeuds 2 et/ou le terminal 1 A, ses propres moyens de calculs ainsi que des moyens de sauvegarde d'une configuration de fonctionnement et de gestion de son fonctionnement en fonction de cette configuration mémorisée.

Dans l'exemple de la figure 1, les noeuds 2 sont répartis dans deux zones concentriques 4A et 4B entourant le campement 1. Ces zones, couramment dénommées glacis, constituent zones de détection d'une éventuelle intrusion par différents noeuds porteurs de capteurs. Dans chacune de ces zones, le RCSD est configuré de manière différente afin d'atteindre des performances cibles différentes.

Le procédé est mis en oeuvre dans un dispositif portable utilisé par l'opérateur et comportant notamment, comme illustré sur la figure 2 :

- une unité de traitement d'information 5,
- un clavier de saisie d'information 6,
- un écran 7 d'affichage pour la mise à disposition d'information pour l'opérateur
- une base de données 8 contenant notamment :

- les caractéristiques des noeuds utilisables et leur modèle de comportement ;
- un modèle pour chaque critère de performance en fonction du nombre de noeuds déployés ; et
- le procédé mis en oeuvre selon l'invention, et

- une interface 9 de connexion temporaire à chaque noeud pour la sauvegarde dans celui-ci de sa configuration

Comme connu en soi, notamment de [Meda09], plusieurs critères de performance, notés CP, sont définis pour caractériser le fonctionnement d'un RCSD dans une zone donnée. Par exemple, sont considérés comme CP :

- La probabilité de non-détection ($P_{md}$)

- Le délai de transmission des alertes (D)

- La durée de vie du système (L)

Pour chaque type de CP, le dispositif mettant en oeuvre le procédé comporte un modèle sous forme empirique (par exemple abaque) ou analytique (par exemple expression mathématique). Chaque modèle prend en compte les paramètres configurables du système décrits en section dans la suite (par exemple : placement des noeuds, proportion du temps où le module capteur est actif $\beta_{sens}$, proportion du temps où le module radio est actif $\beta_{comm}$)· Un exemple pour chacun des CP mentionnés ci-dessus est donné dans la suite de la description.

Dans le cadre du déploiement d'un RCSD à des fins de surveillance, deux catégories de CP sont définies :

- Les CP constituant des Contraintes (CPC) : ce sont des CP pour lesquels l'opérateur définit un ensemble de valeurs "seuil", noté CPC*, qui contraignent le point de fonctionnement à atteindre. Par exemple, le RCSD doit opérer de manière telle que $P_{md}$ soit inférieur à $(P_{md})$* = 10%, autrement dit telle que la probabilité de manquer une cible traversant la zone soit inférieur à 10%.

- Les CP à Optimiser (CPO) : ce sont des CP pour lesquels l'opérateur souhaite connaître la valeur optimale sous réserve de CPC* donnés. Le(s) type(s) de CPO indique(nt) implicitement la(les) direction(s) selon laquelle(lesquelles) une technique d'optimisation, $F_{OPT}$, définie plus loin dans la description doit opérer. Par exemple :

  ◦ CPO={ $P_{md}$ } : Minimisation de la probabilité de non-détection $P_{md}$

  ◦ CPO={L} : Maximisation du temps de vie du système L

  ◦ CPO={D} : Minimisation du délai de transmission des alertes D

Par exemple, l'opérateur souhaite maximiser L au vu de contraintes sur $P_{md}$ et D, on a : CPO={L}, CPC={Pmd, D}, avec CPC*={$P_{md}$ * = 10% et D* = 100ms}. Dans ce cas, la technique d'optimisation indique par exemple que la valeur maximale de L est de 30 jours.

Lors de la mise en oeuvre du procédé, l'opérateur spécifie initialement parmi l'ensemble des CP au moins un CPC, associé à une valeur CPC*, et au moins un CPO. Un type de CP ne peut être à la fois associé à un CPC et un CPO.

On appelle point de fonctionnement, noté PF, un n-uplet de valeurs correspondant aux différents CP, qui caractérise le fonctionnement du RCSD pour un dimensionnement donné des paramètres système du RCSD. Par exemple, pour le paramétrage ($\beta_{sens}$ = 4%, $\beta_{comm}$ =13%) et un certain placement de noeuds, le point de fonctionnement PF est ainsi défini : $P_{md}$ = 17% , D = 113ms, L = 27 jours.

Le but du procédé est d'assister un opérateur en charge du déploiement ou de la maintenance d'un RCSD en l'aidant à faire les choix de configuration système au regard de:

- Contraintes opérationnelles. Par exemple :

  ◦ Valeurs "seuil" sur les CPC. Par exemple, le point de fonctionnement sur une zone doit satisfaire que la probabilité de non-détection d'une cible est inférieure à 10% ($P_{md}$* = 10%).

  ◦ Positionnement de certains noeuds grâce à la connaissance qu'a l'opérateur du terrain.

- (optionnel) Valeurs « objectif » sur les CPO. Par exemple, il faut que la meilleure durée de vie atteignable soit d'au moins 100 jours.

Le procédé peut être utilisé pour configurer k sous-systèmes déployés dans un ensemble de zones à surveiller, noté Z = {$Z_1$, $Z_2$, ..., $Z_k$}, chaque zone ayant des contraintes opérationnelles spécifiques.

Pour déterminer la configuration optimale d'une zone, le procédé prévoit deux modes que l'opérateur peut sélectionner et qui correspondent à deux approches différentes :

◦ MODE1 : l'opérateur souhaite opérer le sous-système d'une manière qui satisfasse en priorité des contraintes sur certains CP (CPC), peu importe la valeur optimale obtenue sur d'autres CP (CPO).

Dans ce cas, aucun objectif n'est fixé sur le CP à optimiser. Le but est de déterminer, s'il existe, le PF optimal pour un nombre de noeuds donné, c'est-à-dire le PF qui respecte les contraintes et donne la meilleure valeur que l'on puisse espérer pour CPO, peu importe cette dernière.

Par exemple, si CPO={L}, CPC={$P_{md}$, D}, avec CPC*={$P_{md}$ * = 10% et D* =100ms}, le procédé détermine que le meilleur point de fonctionnement, avec 5 noeuds, au vu de L, est tel que : L = 30 jours, $P_{md}$ = 10%, D = 100ms.

◦ **MODE2** : l'opérateur souhaite opérer le RCSD d'une manière qui satisfasse d'une part les contraintes sur certains CP et, d'autre part, telle que la valeur optimale sur certains CP, soit au-delà d'une valeur « objectif », noté $CPO_{obj}$.

Un objectif est fixé sur le CP à optimiser. Le but est de déterminer le nombre minimum de noeuds à utiliser tel que $CPO_{obj}$ est atteint et les contraintes sont respectées pour le PF optimal.

Par exemple, si CPO={L} avec $CPO_{obj}$ = $L_{obj}$ = 10 jours, et CPC={Pmd, D}, avec CPC*={$P_{md}$ * = 10% et D* = 100ms}, le procédé indique que le nombre minimum de noeuds requis pour que le sous-système dure au moins 10 jours est de 3 noeuds.

En jouant sur le nombre de noeuds, leurs positions éventuelles, sur les contraintes (par exemple CPC*, dimension de la zone) et objectifs définis (par exemple $CPO_{obj}$), l'opérateur est invité à faire fonctionner le procédé global, noté $PROC\_GLOBAL_z$, de manière itérative jusqu'à trouver les points de fonctionnement le satisfaisant pour l'ensemble des zones dans la limite du nombre total de noeuds à sa disposition

Le procédé global d'assistance au déploiement est noté $PROC\_GLOBAL_z$. Ce procédé s'applique sur un ensemble de zones Z dont les caractéristiques et contraintes opérationnelles varient.

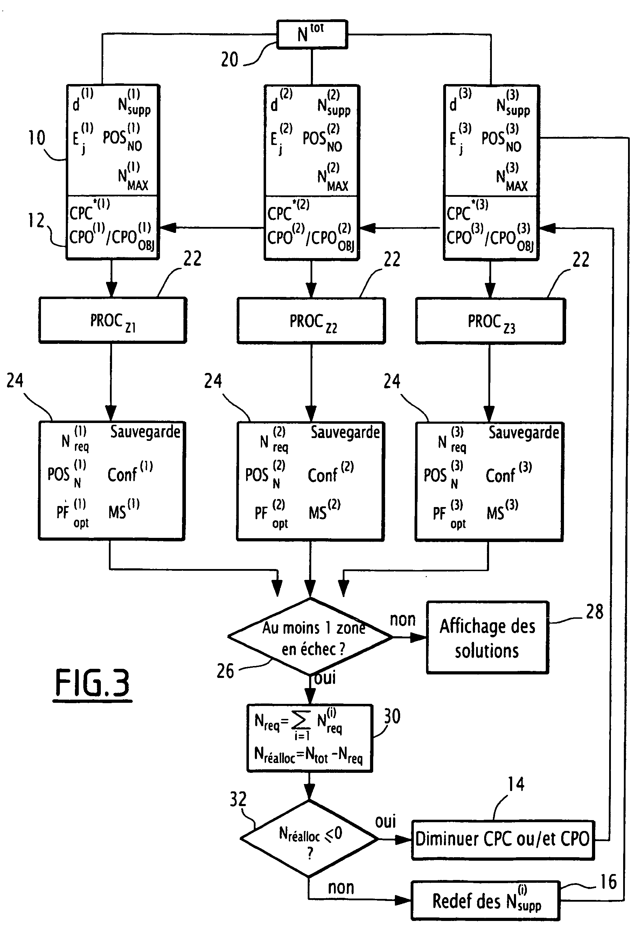

La figure 3 montre le principe de fonctionnement du procédé global dans le cas où 3 zones sont mises en oeuvre.

Selon l'invention, le procédé est itératif et les étapes principales sont mises en oeuvre plusieurs fois avec des nombres de noeuds différents.

De manière schématique, pour commencer à utiliser le procédé, l'opérateur :

• Indique aux étapes 10 les caractéristiques invariantes des zones qu'il souhaite protéger (par exemple dimensions, énergie initiale contenue dans les noeuds)

• Initialise aux étapes 12 un jeu de contraintes CPC et objectifs CPO qu'il souhaite atteindre sur les critères de performances de chaque zone.

Après itération du procédé, l'opérateur :

• Analyse les résultats en visualisant les zones qui nécessitent davantage de noeuds et/ou un relâchement des contraintes CPC et objectifs CPO.

Tant qu'il n'a pas abouti à une configuration réalisable répondant à ses besoins opérationnels sur chaque zone (par exemple : il reste des zones où aucun point de fonctionnement ne satisfait les contraintes, ou des zones où l'objectif sur le CP à optimiser n'est pas atteint), les étapes du procédé sont réitérées :

• En augmentant à l'étape 14 le nombre de noeuds utilisés dans certaines zones, à condition que des noeuds puissent leur être réallouées

• En relâchant à l'étape 16 certaines des contraintes ou objectifs sur le CP à optimiser dans ces zones

Le procédé global $PROC\_GLOBAL_z$ est appelé comme suit. On détaille ci-après les entrées et sorties correspondantes ainsi que le fonctionnement.

$$PROC\_GLOBAL_Z(\ N_{tot},\ \{CPC^{*(i)},\ CPO_{obj}^{(i)},\ POS_{N0}^{(i)},\ N_{supp}^{(i)},\ N_{max}^{(i)},\ d^{(i)}\ \}\ pour\ toute\ zone$$

$$Z_i) = \{\ (POS_{Nreq}^{(i)},\ PF_{opt}^{(i)},\ CONF^{(i)},\ N_{req}^{(i)},\ MS^{(i)})\ pour\ toute\ zone\ Z_i\ \}$$

**Entrées**

L'opérateur définit (les étapes correspondantes de la figure 3 sont rappelées entre parenthèses) :

- $N_{tot}$ : Le nombre total de noeuds qu'il souhaite placer (étape 20)

- Pour chaque noeud j (étapes 10)

  ◦ Constantes sur les noeuds :

- **Ej**: l'énergie initiale contenue dans la batterie du noeud j

- Pour chaque zone $Z_i$ (étapes 10)

  o Constantes sur le dimensionnement du sous-système :

- $d^{(i)}$: la dimension de la zone

  o Nombre et positions des noeuds :

- $N_{supp}^{(i)}$ le nombre de capteurs à déployer dont la position n'est pas imposée par l'opérateur

- (optionnel) $POS_{NO}^{(i)}$ : la position imposée d'un ensemble de noeuds

- (optionnel) $N_{max}^{(i)}$ : le nombre de noeuds maximum à déployer dans la zone.

  ◦ Contraintes opérationnelles : (étapes 12)

- $CPC^{*(i)}$ : la valeur "seuil" des CP Contraintes.

  ▪ (optionnel) valeurs des paramètres bas niveau du système (par exemple $\beta_{sens}$ la proportion du temps où le module d'observation est actif, ou $\beta_{com}$ la proportion du temps où le module de transmission radio est actif).

  ◦ Stratégie : (étapes 12)

- $CPO^{(i)}$ : le type de CP à optimiser. Par exemple, CPO = {L, D}.

- (optionnel) $CPO_{obj}^{(i)}$ la valeur "objectif" du ou des CP à optimiser La somme total des $N_{supp}^{(i)}$ est inférieure ou égale à $N_{tot}$.

**Sorties**

L'opérateur obtient en sortie :

  ◦ $N_{réalloc}$ : le nombre de noeuds pouvant être réalloués.

  ◦ Pour chaque zone $Z_i$

    ▪ $POS_{Nre}(i)$ : le positionnement de l'ensemble des noeuds

    ▪ $PF_{opt}^{(i)}$ : le point de fonctionnement optimal au vu des CPC* (et $CPO_{obj}$ si ce dernier est défini), c.à.d les valeurs de CP qui satisfont CPC* et $CPO_{obj}$ avec la configuration système bas-niveau du RCSD correspondant à ces valeurs.

- **CONF$^{(i)}$** : le paramétrage du système (par exemple $\beta_{sens}$, $\beta_{com}$) correspondant au point de fonctionnement **PF$_{opt}$$^{(i)}$**

- **N$_{req}$$^{(i)}$** : le nombre minimum de noeuds requis dans la zone

- **MS$^{(i)}$** Motif de sortie de PROC $_{Zi}$(CPC*$^{(i)}$, CPO$_{obj}$$^{(i)}$, POS$_{N0}$$^{(i)}$, N$_{supp}$$^{(i)}$, N$_{max}$$^{(i)}$, d$^{(i)}$)

Le procédé fonctionne de manière itérative en sollicitant une interaction avec l'opérateur à la fin de chaque itération. En particulier, une itération du procédé global consiste à :

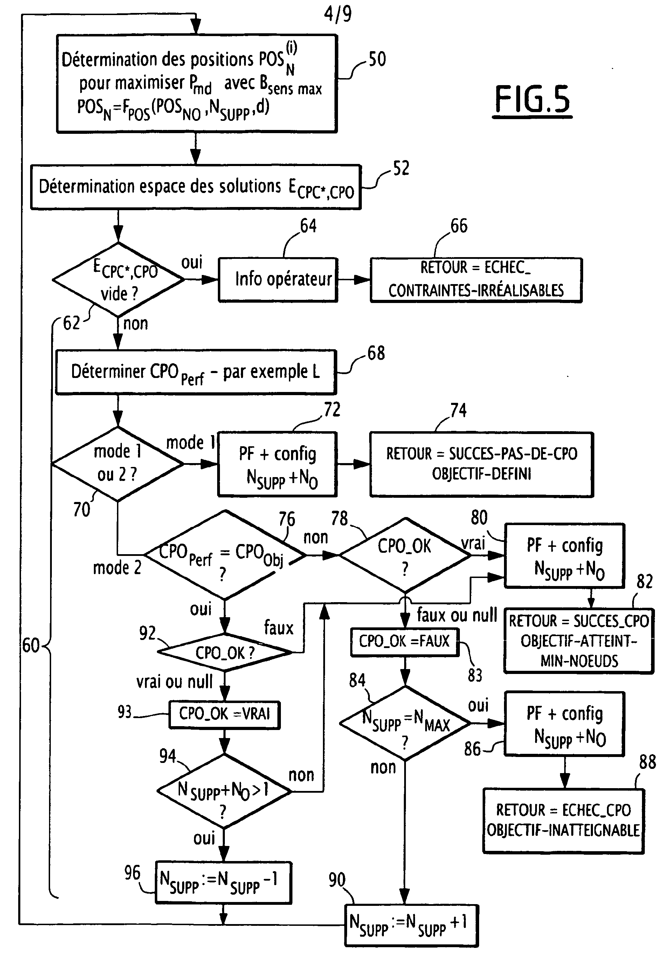

- Appliquer un processus d'optimisation par zone, par application aux étapes 22 d'une procédure PROC$_{Zi}$ décrite en regard de la figure 5 ou PROC_MAX-SURFACE$_{Zi}$ sur chacune des zones.

- Interagir avec l'opérateur en lui présentant les résultats sur l'ensemble des zones, notamment dans les zones qui nécessitent davantage de noeuds et/ou un relâchement des contraintes et objectifs.

- Enregistrer les nouvelles entrées à appliquer sur les zones (par exemple ajout de noeuds, assouplissement des contraintes).

Tant qu'une configuration réalisable répondant aux besoins opérationnels de l'opérateur n'est pas atteinte sur chaque zone, le procédé est réitéré en initialisant ou modifiant le jeu de contraintes et objectifs que l'opérateur souhaite atteindre.

Le procédé peut ainsi s'exprimer par l'algorithme qui suit décrit toujours en regard de la figure 3.

**RETOUR = CONTINUER**

**PROBLEME** = **NULL** (la variable PROBLEME indique si une zone ne peut satisfaire les CP avec les N$_{req}$$^{(i)}$)

**Tant que RETOUR = CONTINUER**

Pour chaque zone Z$_i$,

Exécuter à l'étape 22 le processus d'optimisation par zone : PROC$_{Zi}$

Stocker à l'étape 24 :

N$_{req}$$^{(i)}$ : le nombre de noeuds requis dans la zone
POS$_N$$^{(i)}$ : le positionnement des noeuds dans la zone
PF$_{opt}$ $^{(i)}$: le point de fonctionnement optimal s'il a été déterminé
CONF$^{(i)}$ : le paramétrage du système correspondant
MS$^{(i)}$ : le motif de sortie de PROC$_{Zi}$

Si le motif de sortie de PROC$_{Zi}$ est **ECHEC_CONTRAINTES-IRREALISABLES** ou **ECHEC_CPO-OBJECTIF-INATTEIGNABLE**
**PROBLEME = VRAI**

Un test est effectué à l'étape 26 pour déterminer suivant la valeur de la variable PROBLEME, si les CP ne peuvent être atteints dans au moins une zone.

Si **PROBLEME** = **NULL**

Afficher, à l'étape 28, pour chaque zone : N$_{req}$$^{(i)}$, PF$_{opt}$$^{(i)}$, POS$_N$$^{(i)}$, POS$_N$$^{(i)}$, CONF$^{(i)}$ et le motif de sortie.

**RETOUR** = **STOP**

Sinon :

Calculer, à l'étape 30, le cumul de noeuds requis au minimum sur l'ensemble des zones et le nombre de noeuds pouvant être potentiellement réalloués N$_{réalloc}$.

A l'étape 32, un test est effectué sur la valeur de $N_{réalloc}$

Si $N_{réalloc}$ est nul

L'opérateur est informé à l'étape 14 qu'il est impossible de configurer un RCSD sur l'ensemble des zones dans la limite des noeuds disponibles et au vu des contraintes et objectifs éventuellement définis.

Suggérer à l'étape 14 de relâcher les contraintes et/ou objectifs éventuellement définis dans les zones dont le motif de sortie est **ECHEC_CONTRAINTES-IRREALISABLES** ou **ECHEC_CPO-OBJECTIF-INATTEIGNABLE**

**RETOUR = STOP**

Sinon

Faire réallouer à l'opérateur à l'étape 16 les noeuds disponibles aux zones ayant retourné **ECHEC CONTRAINTES-IRREALISABLES** ou **ECHEC CPO-OBJECTIF-INATTEIGNABLE**

Mémoriser aux étapes 10 et/ou 12 la nouvelle allocation de noeuds par zone et/ou les nouvelles contraintes et/ou les nouveaux objectifs.

**PROBLEME = NULL**

Recommencer

**Exemple d'itération du procédé global**

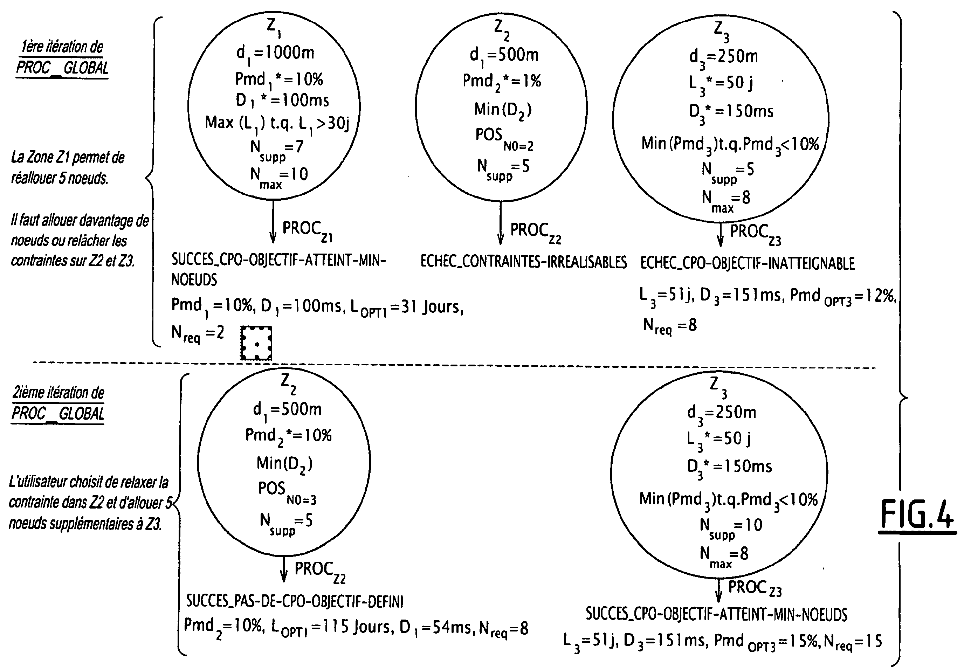

La figure 4 montre le déroulement du procédé global sur trois zones où 2 itérations seront nécessaires pour trouver une configuration réalisable sur l'ensemble des zones.

Le fonctionnement du processus d'optimisation sur une zone Z noté $PROC_Z$ va maintenant être décrit en regard de la figure 5. Il peut être instancié selon les 2 modes MODE1 et MODE2 décrits précédemment.

On détaille ci-après les entrées et sorties correspondantes.

$$PROC_Z(CPC^*, CPO_{obj}, POS_{N0}, N_{supp}, N_{max}, d) = (POS_N PF_{opt}, N_{req}, CONF, MS)$$

**Entrées**

Les entrées suivantes peuvent être initialisées par l'opérateur au premier appel du procédé, ou incrémentées ou décrémentées lors d'une itération du procédé.

Les entrées se répartissent comme suit :

- Constantes sur les noeuds :

  o **Ej :** l'énergie initiale contenue dans la batterie du noeud j

- Constantes sur le dimensionnement du système :

  ∘ **d**: la dimension de la zone (par exemple largeur de la zone carrée à surveiller de 1000m)

- Nombre et positions des noeuds :

  ∘ **$N_{supp}$** : le nombre de capteurs à déployer dont la position n'est pas imposée par l'opérateur.

  ∘ (optionnel) **$POS_{N0}$**: la position souhaitée d'un sous-ensemble $N_0$ de noeuds.

  ∘ (optionnel) **$N_{max}$** le nombre de noeuds maximum à déployer dans la zone si l'opérateur dispose d'un nombre limité de noeuds.

- Contraintes opérationnelles

  ∘ **$CPC^*$:** la valeur "seuil" des CP Contraintes. Par exemple :

    ▪ $P_{md}^* = 10\%$ (Probabilité de non-détection inférieure à 10%)

    ▪ $D^* = 100ms$ (Délai de transmission de l'alerte jusqu'au noeud passerelle inférieur à 100ms)

- L* = 30 jours (Durée de vie du système supérieure à 30 jours)

    o (optionnel) Forçage si besoin des paramètres bas niveau du système :

- $\beta_{sens}$ = 10% (proportion du temps où le module d'observation est actif, ici de 10%).

- $\beta_{comm}$ = 10% (proportion du temps où le module de transmission radio est actif, ici de 10%).

- Stratégie

    ○ *CPO :* le type de CP à optimiser. Par exemple, CPO = {L, D}.

    ○ (optionnel) ***CPO_{obj}*** : la valeur "objectif" du CP à optimiser

**Sorties**

Le procédé produit en sortie :

- ***POS_N*** : le positionnement de l'ensemble des noeuds requis

- ***PF_{opt}***: le point de fonctionnement optimal au vu des CPC* et CPO_{obj} (si ce paramètre est défini), c'est-à-dire les valeurs de CP qui satisfont CPC* et CPO_{obj} (si ce paramètre est défini), avec la configuration bas-niveau du RCSD correspondant à ces valeurs.

- ***CONF:*** le paramétrage du système (par exemple $\beta_{sens}$, $\beta_{com}$) correspondant au point de fonctionnement ***PF_{opt}***

- ***N_{req}*** : le nombre de noeuds requis. Selon le mode dans lequel le processus fonctionne, il se peut que ce nombre de noeuds diffère du nombre de noeuds alloués initialement en entrée (dans le MODE2, le processus peut déterminer qu'un nombre supérieur, ou inférieur, au $N_{supp}$ initial est requis pour satisfaire la valeur objectif sur CPO)

- *MS :* le motif de sortie

    ○ **ECHEC_CONTRAINTES-IRREALISABLES :** il n'existe aucune manière de configurer les systèmes tel qu'un point de fonctionnement satisfasse les valeurs « seuil » CPC*

    o **ECHEC_CPO-OBJECTIF-INATTEIGNABLE :** il n'est pas possible, dans la limite du nombre de noeuds disponibles, de trouver un point de fonctionnement tel que l'objectif sur CPO soit atteint

    ○ **SUCCES_PAS-DE-CPO-OBJECTIF-DEFINI :** pour le nombre de noeuds utilisés, $N_{supp}$ initial, au moins un point de fonctionnement existe qui satisfait les contraintes. Le procédé indique alors le meilleur des points de fonctionnement au vu du CPO (peu importe la valeur optimale du CPO).

    ○ **SUCCES CPO-OBJECTIF-ATTEINT-MIN-NOEUDS :** le nombre de noeuds requis $N_{req}$ (éventuellement différent du $N_{supp}$ initial) est minimum pour que le meilleur point de fonctionnement atteignable satisfasse à la fois les contraintes et la valeur objectif sur CPO.

Pour un nombre de noeuds donné, le processus PROC_Z détermine dans une zone:

•    La position géographique optimale de l'ensemble des noeuds

•    Le point de fonctionnement optimal au vu de CPO et des valeurs « seuil » sur les CPC (i.e., CPC*), ainsi que le paramétrage du système correspondant.

Dans le MODE1, le processus PROC_Z présente les résultats ci-dessus à l'opérateur à la fin d'une itération du procédé PROC_GLOBAL_Z.

Dans le MODE2, le processus PROC_Z itère sur le nombre de noeuds utilisés jusqu'à déterminer le nombre minimum de noeuds requis pour atteindre une valeur « objectif » sur les CPO. Pour ce nombre de noeuds, le processus PROC_Z présente les résultats à l'opérateur à la fin d'une itération du procédé PROC_GLOBAL_Z.

Le procédé fonctionne par étapes comme suit :
**RETOUR = CONTINUER ; CPO_OK = NULL**
**Tant que RETOUR = CONTINUER**
A l'étape 50, on détermine la position de l'ensemble des noeuds, notée $POS_N$

$POS_N$ est l'ensemble des positions des noeuds qui maximisent la probabilité de non-détection dans la situation hypothétique où le module capteur de chaque noeud est constamment actif (i.e., $\beta_{sens} = 1$).

$$POS_N = F_{POS}(POS_{N0}, N_{supp}, d)$$

où $POS_N$ est la position géographique de l'ensemble des noeuds déployés dans la zone. Cet ensemble inclue les $N_0$ noeuds dont la position est fixée par l'opérateur et les $N_{supp}$ noeuds supplémentaires à placer dans la zone.

Garder en mémoire **$POS_N$**.

et où $F_{POS}$ est la technique d'optimisation décrite ci-dessous.

La fonction d'optimisation $F_{POS}$ est mise en oeuvre pour déterminer le positionnement optimal d'un certain nombre de capteurs à l'intérieur d'une zone.

Pour suggérer un positionnement des noeuds dans une zone de couverture, les techniques d'algorithme génétique de tri non-dominé connues en soi sont mises en oeuvre. $F_{POS}$ détermine alors l'ensemble des positions des noeuds tel que la valeur de $P_{md}$ est minimale dans le cas où les modules capteur des noeuds sont constamment actifs.

Il est possible de fixer en entrée la position d'un certain nombre de noeuds.

**Entrées de** $F_{POS}$

- (optionnel) le positionnement prédéterminée d'un sous-ensemble de noeuds $POS_{N0}$
- le nombre de noeuds dont la position n'est pas imposée par l'opérateur
- d : la dimension de la zone

**Sorties de** $F_{POS}$

- $POS_{N0}$ : la position de l'ensemble des noeuds

Sachant $POS_N$, on détermine à l'étape 52 l'espace des solutions noté $E_{CPC^*,CPO}$.

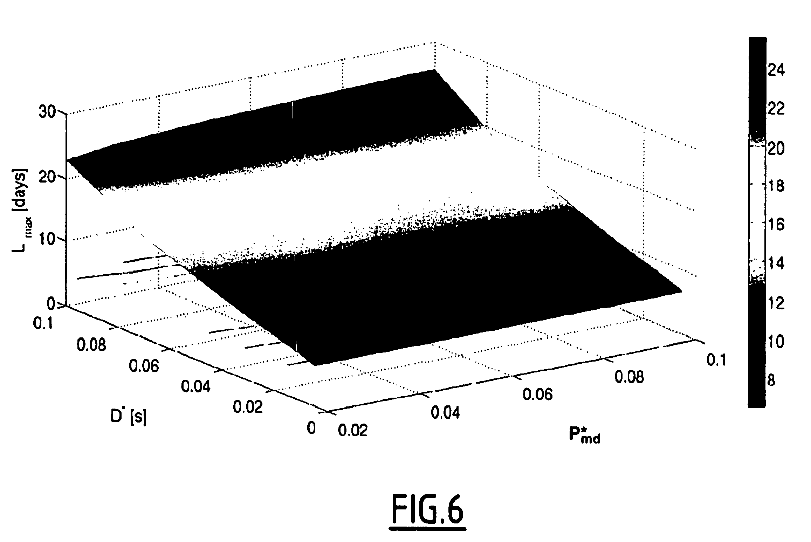

Cet espace donne l'ensemble des réalisations particulières de CPO qui sont obtenues pour tout CPC en-deça des valeurs "seuil" CPC*. Cet ensemble est visualisable sous la forme d'un graphique G multi-dimensionnel tel qu'illustré sur la figure 6.

$$E_{CPC^*,CPO} = \{\ CPC^{(0)},\ CPO^{(0)}\ \textit{tel que}\ CPO^{(0)} = F_{OPT}(CPC^{(0)}, POS_N)$$

$$\text{pour tout}\ CPC^{(0)}\ \text{qui satisfait CPC*}\}$$

où $F_{OPT}$ désigne une technique d'optimisation simple ou multi-objectif décrites ci-dessous.

En utilisant les modèles analytiques décrits précédemment, deux méthodes d'optimisation peuvent être utilisées selon que l'on cherche à déterminer la valeur optimale d'un ou plusieurs critères de performance sous réserve de certaines contraintes.

On appelle $F_{OPT}$ la méthode d'optimisation mise en oeuvre.

- Lorsqu'un seul critère de performance doit être optimisé, $F_{OPT}$ désigne une technique d'optimisation simple-objectif, telle que l'optimisation par descente de gradient.
  Celle-ci peut être mise en oeuvre si l'ensemble des équations identifiées pour modéliser le système constitue un ensemble convexe.
- Lorsque deux ou plusieurs critères de performance doivent être optimisés, $F_{OPT}$ désigne une technique d'optimisation multi-objectif, qui permet d'optimiser simultanément des fonctions d'objectifs contradictoires, sous réserve de certaines contraintes éventuelles. Nous pouvons par exemple utiliser une méthode de classement, basée sur la Pareto optimalité, mettant en jeu des techniques récentes, à savoir l'algorithme génétique de tri non-dominé (en anglais, Non-dominated Sorting Genetic Algorithm-II)

Entrées de $F_{OPT}$

- le positionnement de l'ensemble des noeuds $POS_N$

- $CPC^{(0)}$: l'ensemble des valeurs des CP Contraintes

- CPO: l'ensemble des CP dont la valeur doit être optimisée

- d: la dimension de la zone

Sorties de $F_{OPT}$

- $CPO_{opt}^{(0)}$: l'ensemble formé des valeurs optimales pour chaque CP inclus dans CPO

Par exemple, si l'opérateur choisit d'avoir:

- CPC = {D, $P_{md}$} avec CPC* = {D* = 100ms, $P_{md}$* = 10%}

- CPO = {L}

Alors $E_{D* = 100ms, Pmd*=10\%, L}$ = {$L_{opt}^{(0)}$, $(P_{md})_{max}^{(0)}$, $D_{max}^{(0)}$ tel que :

$$L_{opt}^{(0)} = F_{OPT}((P_{md})_{max}^{(0)}, D_{max}^{(0)}) \text{ et } (P_{md})_{max}^{(0)} <= P_{md}^{\star} \text{ et } D_{max}^{(0)} <= D^{\star}) \}$$

Toujours dans cet exemple, le graphique G est alors tel que dans la figure 6. G comporte notamment des points indiquant que :

- la durée de vie maximale est de 18 jours avec $(P_{md})_{max}$ = 2% et $D_{max}$ = 80ms.

- la durée de vie maximale est de 13 jours avec $(P_{md})_{max}$ = 10% et $D_{max}$ = 60ms.

Une exploration des résultats est effectuée lors des phases 60.

a) Si : ECPC*,CPO est vide lors de l'étape 62

Par exemple, il n'existe aucun PF avec 5 noeuds dans la zone tel que Pmd < 1% et D < 15ms. Il est alors impossible de déterminer une valeur réalisable, et a fortiori optimale, pour la durée de vie.
Informer à l'étape 64 l'opérateur qu'il est impossible de configurer et opérer le RCSD dans un point de fonctionnement tel que les valeurs "seuil" sur les CP Contraintes sont satisfaites.
Suggérer à l'étape 64 à l'opérateur de réessayer en modifiant les paramètres d'entrée initiaux. Par exemple, l'opérateur peut :

- augmenter le nombre de noeuds $N_{supp}$

- relâcher les valeurs "seuil" imposées aux CPC.

RETOUR = **ECHEC_CONTRAINTES-IRREALISABLES** (étape 66)

b) Sinon : $E_{CPC*,CPO}$ est non-vide ($CPO_{perf}$ existe) (test effectué en 62)

On détermine à l'étape 68 la valeur la plus performante du $CPO_{perf}$ sur l'espace des solutions $E_{CPC*,CPO}$ (s'il est non vide)

On note $CPO_{perf}$ la valeur la plus performante du CPO sur l'espace des solutions $E_{CPC*,CPO}$.

Par exemple, $L_{perf}$ ($P_{md}*,D*$) = max $L_{opt}^{(0)}$ sur l'ensemble $E_{D*,Pmd*,L}$. Dans l'exemple, $L_{perf}$ ($P_{md}*$ = 10%,D*=100ms) = 25j au vu de $E_{D*\ =\ 100ms,Pmd*=10\%,\ L}$

On note $PF_{opt}$ le point de fonctionnement optimal tel que CPO= $CPO_{perf}$ et CONF le paramétrage du système permettant d'atteindre $PF_{opt}$.

Déterminer et garder en mémoire $PF_{opt}$ et CONF.

Un test est effectué à l'étape 70 pour définir le mode retour.

i) Si aucun objectif n'a été défini sur les CPO **(MODE1),** c'est-à-dire que l'opérateur cherche à opérer le RCSD dans un PF satisfaisant les contraintes (CPC*) et se limite à connaître la valeur la plus performante sur un CP à optimiser (CPO).

Afficher, à l'étape 72, le point de fonctionnement optimal et la configuration obtenue à l'étape 54, ainsi que la topologie obtenue à l'étape 50 et le nombre de noeuds utilisés ($N_{supp}$ + $N_0$)

**RETOUR = SUCCES_PAS-DE-CPO-OBJECTIF-DEFINI** (étape 74)

Recommencer

ii) Sinon : un objectif $CPO_{obj}$ a été défini sur CPO **(MODE2)**

Un test est effectué à l'étape 76 pour définir l'atteinte de l'objectif CPO_OK.

(1) Si $CPO_{perf}$ ne satisfait pas $CPO_{obj}$ (Si la meilleure performance atteignable sur le CP à optimiser est en deçà de l'objectif)

Si CPO_OK = VRAI (étape 78)

Afficher à l'étape 80 le point de fonctionnement optimal et la configuration obtenue à l'étape 54 à l'itération précédente, ainsi que la topologie obtenue à l'étape 50 et le nombre de noeuds utilisés ($N_{supp}$ + $N_0$) à l'itération précédente.

## RETOUR = SUCCES_CPO-OBJECTIF-ATTEINT-MIN-NŒUDS (étape 82)

Recommencer

Sinon (c'est-à-dire que CPO_OK = FAUX ou CPO_OK = NULL)

CPO_OK = FAUX (étape 83)

Un test est effectué à l'étape 84 pour définir si $N_{supp}$ est égal au maximum disponible éventuellement défini à l'étape 84.

Si $N_{supp}$ est égal au maximum disponible éventuellement défini

Afficher à l'étape 86 le point de fonctionnement optimal et la configuration obtenue à l'étape 54, ainsi que la topologie obtenue à l'étape 50 et le nombre de noeuds utilisés ($N_{supp}$ + $N_0$)

RETOUR = **ECHEC_CPO-OBJECTIF-INATTEIGNABLE** (étape 88)

Sinon

Incrémenter $N_{supp}$ à l'étape 90

Recommencer.

(2) Sinon : $CPO_{perf}$ satisfait $CPO_{obj}$ à l'étape 76 (c'est-à-dire la meilleure performance atteignable sur le CP à optimiser est au-delà de l'objectif)

Un test sur la valeur de CPO_OK est effectué à l'étape 92

Si CPO_OK = FAUX alors :

Afficher, à l'étape 80, le point de fonctionnement optimal et la configuration obtenue à l'étape 54, ainsi que la topologie obtenue à l'étape 50 et le nombre de noeuds utilisés ($N_{supp}$ + $N_0$)

**RETOUR = SUCCES_CPO-OBJECTIF-ATTEINT-MIN-NOEUDS** (étape 82)

Recommencer

Sinon (c'est-à-dire que CPO_OK = VRAI ou CPO_OK = NULL)

CPO_OK = VRAI (étape 93)

Un test sur le nombre de noeuds utilisés est comparé à l'unité à l'étape 94.
Si le nombre de noeuds utilisés est strictement supérieur à 1
Recommencer en utilisant moins de noeuds (i.e., décrémentant $N_{supp}$) à l'étape 96
Sinon
Afficher à l'étape 80 le point de fonctionnement optimal et la configuration obtenues en 3), ainsi que la topologie obtenue en 1) et le nombre de noeuds utilisés ($N_{supp} + N_0$)
**RETOUR** = **SUCCES_CPO-OBJECTIF-ATTEINT-MIN-NOEUDS** (étape 82)

Recommencer

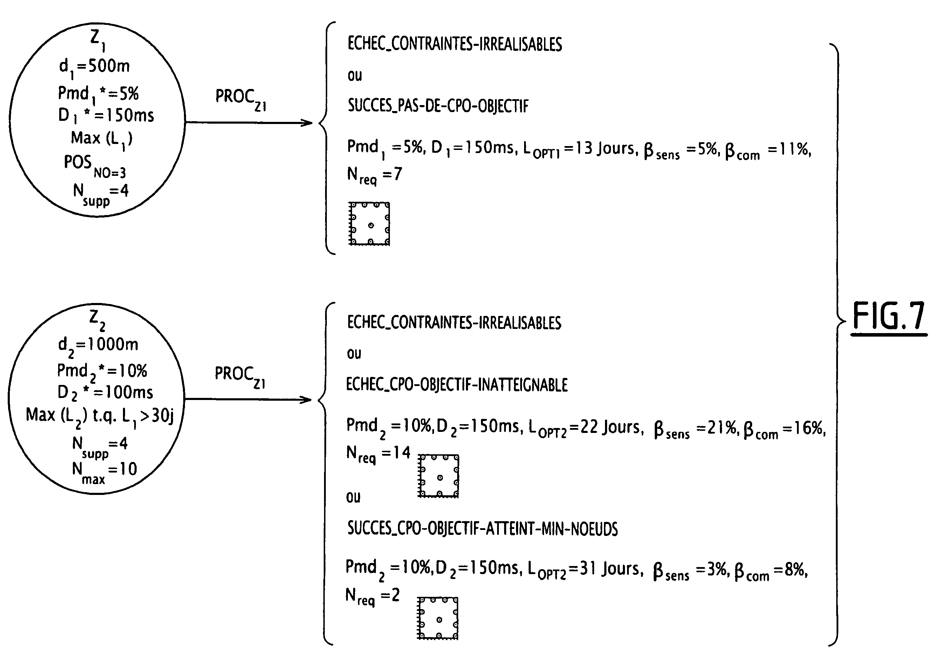

La figure 7 montre les sorties pouvant être produites par le procédé $PROC_Z$ sur deux zones, chacune d'entre elle utilisant un mode d'appel du procédé.
Dans la zone $Z_1$, on utilise le MODE1 car l'opérateur souhaite connaître la configuration qui satisfait prioritairement des contraintes sur $P_{md}$ et D, et donne, de manière secondaire, la meilleure durée de vie. Pour le nombre de noeuds donné, le processus détermine le meilleur point de fonctionnement s'il existe.
Dans la zone $Z_2$, on utilise le MODE2 car l'opérateur souhaite connaître la configuration qui satisfait des contraintes sur $P_{md}$ et D, et telle que la meilleure durée de vie est au-delà d'un objectif. Au bout de quelques itérations, le processus détermine le nombre minimal de noeuds requis pour que le meilleur point de fonctionnement satisfasse, si possible, aussi bien les contraintes que l'objectif. Ce nombre minimal de noeuds est éventuellement supérieur ou inférieur au nombre de noeuds initialement alloués à la zone.
Une variante notée $PROC\_MAX\text{-}SURFACE_Z$ du procédé $PROC_Z$, illustré sur la figure 5, consiste à déterminer la surface maximale d'une zone telle qu'il existe un point de fonctionnement satisfaisant les critères de performance.
Par exemple, en disposant de 15 noeuds, l'opérateur souhaite savoir quelle est la couverture maximale de la zone autour d'une location donnée, qui lui garantit que la probabilité de non-détection est inférieure à 10%.
On note le procédé $PROC\_MAX\text{-}SURFACE_Z(CPC^*, N_{supp})$ ou, pour simplifier, $PROC\_MAX\text{-}SURFACE_Z$. Le procédé fonctionne comme suit. On détaille ci-après les entrées et sorties correspondantes.

$$PROC\_MAX\text{-}SURFACE_Z(CPC^*, C, N) = (POS_N\ PF_{opt},\ CONF,\ MS)$$

**Entrées**

Les entrées suivantes sont initialisées par l'opérateur au premier appel du procédé.
Les entrées se répartissent comme suit :

-   Constantes sur le dimensionnement du système :

    ○ $d_{min}$: la dimension minimale de la zone (par exemple largeur de la zone carrée à surveiller de 1 m minimum)

    ○ **C:** la position du centre de la zone

    ○ **Ei :** L'énergie initiale contenue dans les batteries

-   Nombre de noeuds :

    ○ **N:** le nombre de capteurs à déployer dont la position n'est pas imposée par l'opérateur

-   Contraintes opérationnelles
    ○ *CPC\*:* la valeur "seuil" des CP Contraintes. Par exemple :

        ▪ $P_{md}^* = 10\%$ (Probabilité de non-détection inférieure à 10%)

■ (optionnel) Forçage si besoin des paramètres bas niveau du système.

- Stratégie

  ◦ *CPO :* le type de CP à optimiser. Par exemple, CPO = {L, D}.

**Sorties**

Le procédé produit en sortie :

- $d_{max}$ : la taille maximale de la zone

- $PF_{opt}$: le point de fonctionnement optimal au vu des CPC*, c'est-à-dire les valeurs de CP qui satisfont CPC* avec la configuration bas-niveau du RCSD correspondant à ces valeurs.

- **CONF:** le paramétrage du système (par exemple $\beta_{sens}$, $\beta_{com}$) correspondant au point de fonctionnement $PF_{opt}$

- $POS_N$: le positionnement de l'ensemble des noeuds dans la zone de taille maximale obtenue.

- *MS :* le motif de sortie

  ◦ **ECHEC_IMPOSSIBLE-POUR-TAILLE-MINIMALE :** il n'existe aucune manière de configurer le système tel qu'un point de fonctionnement satisfasse les valeurs « seuil » CPC* pour la taille minimale de la zone.
  ◦ **SUCCES_TAILLE-MAXIMALE-ATTEINTE :**

**Déroulement**

Pour un nombre de noeuds donné, le processus PROC_MAX-SURFACE détermine dans une zone:

• La position géographique optimale de l'ensemble des noeuds
• Le point de fonctionnement optimal au vu de CPO et des valeurs « seuil » sur les CPC (i.e., CPC*), ainsi que le paramétrage du système correspondant

Tant qu'il existe un point de fonctionnement optimal, le processus PROC_MAX-SURFACE itère sur la taille de la zone jusqu'à déterminer la taille maximale pour qu'un point de fonctionnement, optimal, existe. Pour cette taille maximale, le processus présente les résultats à l'opérateur à la fin d'une itération du procédé PROC_GLOBALZ.
Le procédé fonctionne par étapes comme suit :

**RETOUR = CONTINUER ;**

$d = d_{min}$
$d_{step}$, **le pas d'incrémentation de d**

**Tant que RETOUR = CONTINUER**

1) Déterminer la position de l'ensemble des noeuds, notée $POS_N$

$POS_N$ est l'ensemble des positions des noeuds qui minimise la probabilité de non-détection dans la situation hypothétique où le module capteur de chaque noeud est constamment actif (i.e., $\beta_{sens}=1$).

$$POS_N = F_{POS}(N, d)$$

où $F_{POS}$ est la technique d'optimisation décrite dans la section 6.4 "Techniques d'optimisation".
Garder en mémoire $POS_N$

2) Sachant $POS_N$, déterminer l'espace des solutions noté $\mathbf{E_{CPC^*,CPO}}$.

Cet espace donne l'ensemble des réalisations particulières de CPO qui sont obtenues pour tout CPC en-deçà des valeurs "seuil" CPC*. Cet ensemble est visualisable sous la forme d'un graphique G multi-dimensionnel.

$$E_{CPC^*,CPO} = \{ CPC^{(0)}, CPO^{(0)} \text{ } tel \text{ } que \text{ } CPO^{(0)} = F_{OPT}(CPC^{(0)}, POS_N)$$

$$\text{pour tout } CPC^{(0)} \text{ qui satisfait } CPC^*\}$$

où $F_{OPT}$ désigne une technique d'optimisation simple ou multi-objectif telle que décrite précédemment.

3) <u>Exploration des résultats</u>

a) Si : $E_{CPC^*,CPO}$ est vide.

Pour une zone centrée sur C et de taille d, il est impossible de configurer et opérer le RCSD dans un point de fonctionnement tel que les contraintes sont satisfaites.

(Par exemple, pour une zone de largeur 1000m où l'on déploie 5 noeuds, il est impossible de trouver une configuration du RCSD telle que que Pmd < 10%.)

$$\text{Si } d = d_{min}$$

Pour la taille minimale de la zone, il est impossible de configurer et opérer le RCSD dans un point de fonctionnement tel que les contraintes sont satisfaites

**RETOUR = ECHEC_IMPOSSIBLE-POUR-TAILLE-MINIMALE**

Recommencer.

Sinon

$$d_{max} = d - d_{step} \text{ (Déterminer la taille maximale de la zone)}$$

Déterminer la valeur la plus performante du CPO, notée $CPO_{perf}$, pour l'espace des solutions $E_{CPC^*,CPO}$ gardé en mémoire à l'itération précédente.

Afficher le point de fonctionnement optimal, la topologie gardée en mémoire à l'itération précédente et la taille maximale obtenue $d_{max}$.

**RETOUR = SUCCES_TAILLE-MAXIMALE-ATTEINTE**

Recommencer.

b) Sinon : $E_{CPD^*,CPO}$ est non-vide

$$d = d_{min} + d_{step} \text{ (Incrémenter la taille de la zone)}$$

Mémoriser le graphique G représentant $E_{CPC^*,CPO}$ et la topologie déterminée en 1).

Recommencer

Le processus d'optimisation est réalisé sur une description du système sous la forme de « **modèle du système** ». Ce modèle est composé des fonctions ou relations entre les paramètres décrivant le fonctionnement du système. Il permet de dériver les indicateurs de performances sur lesquels l'opérateur place des objectifs (par exemple maximisation du temps de vie du système L). Le procédé peut comporter par exemple les fonctions suivantes :

- $P_{md} = f(POS_N, \beta_{sens})$ : Probabilité de non-détection en fonction de la position des noeuds $Pos_N$ et de la proportion du temps où le module d'observation est actif, $\beta_{sens}$. $Pos_N$ a une influence sur la couverture capteur et $\beta_{sens}$ a une influence sur la capacité d'un capteur à détecter la cible lorsqu'elle est en portée.

- $D = h(Pos_N, \beta_{comm})$ : Délai de transmission des alertes en fonction de la position des noeuds $Pos_N$ et de la proportion du temps où le module de transmission radio est actif Pcomm. $Pos_N$ a une influence sur le nombre de bonds radio et $\beta_{comm}$ sur le délai à chaque bond dans le cas de l'utilisation de X-MAC par exemple.

- $L = g(\beta_{comm}, \beta_{sens}, N_{target})$ : Durée de vie du système en fonction du niveau d'effort consacré pour la partie capteurs (par exemple $\beta_{sens}$) et pour la partie réseau (par exemple $\beta_{comm}$), et en fonction du nombre moyen de cibles détectées par jour $N_{target}$.

Dans la suite de cette section, on présente 3 fonctions caractérisant le fonctionnement du système. Ces fonctions caractérisent la probabilité de non-détection $P_{md}$, la durée de vie du système L et le délai de transmission des alertes D. L'extension de la formulation de la probabilité de non-détection $P_{md}$ proposée par [Lazos09] dans le cadre de l'utilisation de cycles d'endormissement constitue une contribution de ce document. Le reste des formulations est repris de l'état de l'art.

Il est à noter que les techniques d'optimisation utilisées pour déterminer les points de fonctionnement du système sont génériques de sorte que d'autres modèles peuvent être intégrés dans le système. Cela peut permettre de raffiner la modélisation du système et/ou d'étendre les indicateurs de performances caractérisant le fonctionnement du système.

**Hypothèses**

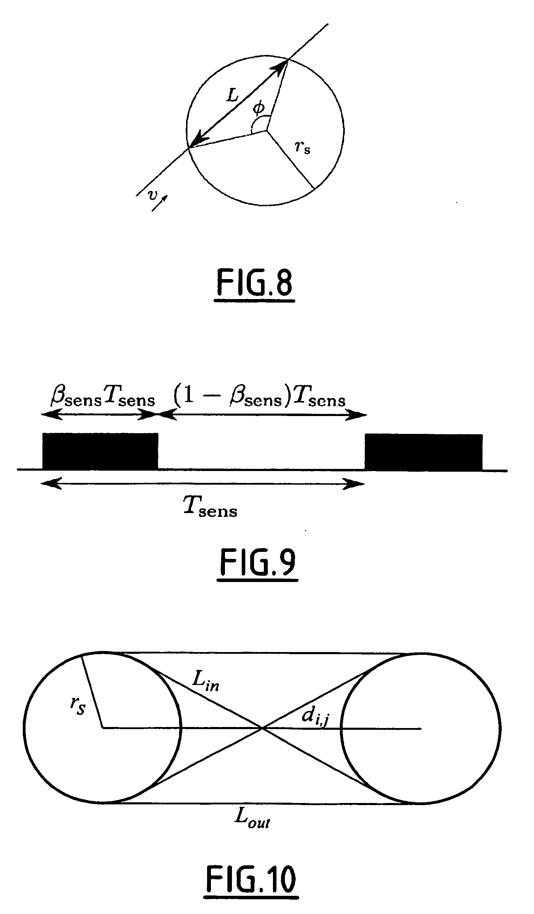

Afin de pouvoir calculer $P_{md}$ (la probabilité de non-détection), nous faisons les hypothèses suivantes. La zone d'intérêt à surveiller est un carré de largeur $d_s$ (dimension: [m]). N noeuds capteurs ayant des couvertures circulaires de rayon $r_s$ illustré sur la figure 8 sont alors déployés pour détecter la présence de cibles dans la zone. Le modèle de comportement de cibles considéré suppose un mouvement rectiligne uniforme où la trajectoire est caractérisée par un angle d'arrivée $\theta$. La vitesse constante est v (dimension: [m/s]). Le point d'entrée de ces cibles étant inconnu a priori, il est choisi aléatoirement sur le contour de la zone.

Les noeuds capteurs comportent au moins deux sous-modules : (i) le module capteurs (par exemple transducteur) et (ii) le module de communication sans-fils. Afin de réduire la consommation de ces deux modules, des cycles d'endormissement (« duty-cycles » en anglais) sont utilisés. Ces cycles sont constitués alternativement d'une phase où le module est actif et d'une phase où le module est inactif. Ils sont caractérisés par deux paramètres : la période du cycle $T_{sens}$ (dimension: [s]) et la proportion du temps $\beta_{sens}$ dans [0,1] où le module est actif tel qu'illustré sur la figure 9. Dans le reste du document, les paramètres sont $(\beta_{sens}, T_{sens})$ et $(\beta_{comm}, T_{comm})$ pour respectivement le module capteur et le module de communication. La puissance consommée lorsque le module capteur est actif est de $\Omega_{sens}$. Dans le reste du calcul, nous considérons également que tous les noeuds capteurs ont les mêmes valeurs pour les paramètres $r_s$, $\beta_{sens}$ et $T_{sens}$.

**Modélisation de la probabilité de non-détection $P_{md}$**

Considérons N noeuds capteurs placés d'une certaine façon et considérons $\beta_{sens} = 1$, la probabilité de détection correspond à la probabilité que la trajectoire de la cible croise au moins un capteur $P_d$ s'exprime de la manière suivante :

$$P_{\mathrm{d}} = 1 - P_{\mathrm{md}} = P(\ell \cap (A_1 \cup A_2 \cup \cdots \cup A_N)) \quad (1)$$

où $\ell$ est la ligne correspondant à la trajectoire de la cible, $A_i$ l'aire de la portée capteurs du noeud $i$.

L'équation (1) peut être réécrite, en utilisant le principe d'inclusion-exclusion de Feller, comme la somme des probabilités conjointes qu'une ligne coupe les diverses couvertures capteurs. On a alors :

$$P_{\mathrm{d}} = \sum_{i=1}^{N} P(\ell \cap A_i \neq 0) - \sum_{i,j\, i<j}^{N} P(\ell \cap A_i \cap A_j \neq 0) + \cdots + (-1)^N P(\ell \cap A_1 \cap A_2 \cdots A_N \neq 0)$$

$$(2)$$

D'après [Lazos09], le cas du déploiement déterministe des noeuds capteurs n'est pas calculable facilement de manière analytique. En revanche, des bornes supérieure et inférieure sont calculables. D'après les inégalités de Bonferroni, les bornes inférieure et supérieure suivantes peuvent être calculées :

$$P_{\mathrm{d1}} - P_{\mathrm{d2}} \leq P_{\mathrm{d}} \leq P_{\mathrm{d1}} \quad (3)$$

où $P_{d1}$ et $P_{d2}$ s'expriment comme suit :

$$P_{\mathrm{d1}} = \sum_{i=1}^{N} \underbrace{P(\ell \cap A_i \neq 0)}_{\triangleq m_1(i)} = \sum_{i=1}^{N} m_1(i) \cdot \quad (4) \qquad P_{\mathrm{d2}} = \sum_{i,j:i<j}^{N} \underbrace{P(\ell \cap A_i \cap A_j \neq 0)}_{\triangleq m_2(i,j)} = \sum_{i,j\, i<j}^{N} m_2(i,j) \quad (5)$$

Les équations (4) et (5) ne prennent pas en compte $P_{\mathrm{sens}}$ Dans la suite de ce calcul, nous étendons $P_{d1}$ et $P_{d2}$ afin de prendre en compte les cycles d'endormissement du module capteur qui s'expriment alors :

$$P_{\mathrm{d1}} = \sum_{i=1}^{N} m_1(i) \cdot P\{\mathrm{Activity}_i\} \quad (6) \qquad P_{\mathrm{d2}} = \sum_{i,j\, i<j}^{N} m_2(i,j) \cdot P\{\mathrm{Activity}_{i,j}\} \quad (7)$$

où les nouveaux facteurs introduits sont :

   ◦ $P\{\mathrm{Activity}_i\}$ : la probabilité que le module capteur du noeud *i* soit ou devienne actif pendant que la cible traverse sa zone de couverture.
   ◦ $P\{\mathrm{Activity}_{i,j}\}$ : la probabilité que les modules capteur des noeud *i* et *j* soient ou deviennent actifs pendant que la cible traverse leurs zones de couverture.

Pour estimer les bornes inférieure et supérieure de l'équation (3), on calcule $P_{d1}$ puis $P_{d2}$.

Formulation de $P_{d1}$

Dans le cas où la zone de couverture du module capteur est un disque de rayon $r_s$, nous avons $m_1(i)= 2\,\pi\,r_s$ / 4 des et le facteur $P\{\mathrm{Activity}_i\}$ peut être calculé selon les résultats présentés par [Meda09] (équation 10).

Formulation de $P_{d2}$

D'après l'équation (7), $P_{d2}$ s'exprime comme suit :

$$P_{\mathrm{d2}} = \sum_{i,j\, i<j}^{N} m_2(i,j) \cdot P\{\mathrm{Activity}_{i,j}\}$$

*i- Calcul de m2(i,i)*

Le terme $m_2(i,j) = P(\ell \cap A_i \cap A_j \neq 0)$ exprime la probabilité que la trajectoire de la cible coupe à la fois les portées des noeuds *i* et j.

En tenant compte du recouvrement éventuel des couvertures des noeuds *i* et j, la formulation générale de $m_2(i,j)$ est comme suit:

$$m_2(i,j) = \begin{cases} \dfrac{L_i + L_j - L_{\text{out}}(d_{i,j})}{L_0}, & A_i \cap A_j \neq 0 \\ \dfrac{L_{\text{in}}(d_{i,j}) - L_{\text{out}}(d_{i,j})}{L_0} & A_i \cap A_j = 0 \end{cases} \tag{8}$$

où les termes correspondants sont, et tel qu'illustré sur la figure 8 :

  ◦ $L_i$ et $L_j$ : les périmètres des zones de couverture respectives des noeuds *i* et *j*,
  ◦ $d_{ij}$ la distance entre les deux noeuds,
  ◦ $L_{in}$ : la longueur de la ligne « en huit » entourant les deux zones de couverture
  ◦ $L_{out}$ : la longueur de la ligne entourant les deux zones de couverture sans se croiser
  ◦ $L_o$ : le périmètre de la zone surveillée

D'après nos hypothèses, on obtient la formulation de $m_2(i,j)$ en sachant que $L_i = L_j = 2\pi r_s$, $L_o = 4\, d_s$ et d'autre part, d'après [Lazos09] (équations 37 et 38):

$$L_{\text{out}}(d_{i,j}) = 2\pi r_s + 2d_{i,j}$$

$$L_{\text{in}}(d_{i,j}) = 2r_s \left[ 2\pi - 2\arccos\left(\frac{2r_s}{d_{i,j}}\right) \right] + 4\sqrt{\frac{d_{i,j}^2}{4} - r_s^2}$$

*ii- Calcul de P{Activity$_{i,j}$}*

Par définition, $P\{\text{Activity}_{i,j}\}$ est la probabilité conjointe de deux événements compatibles, à savoir les modules capteur des noeud *i* et *j* sont ou deviennent actifs pendant que la cible traverse leurs zones de couverture. On a donc :

$$P\{\text{Activity}_{i,j}\} = P\{\text{Activity}_i\} \cdot P\{\text{Activity}_j\} \tag{9}$$

En distinguant le cas où le noeud *i* est actif à l'entrée de la cible dans sa zone et le cas où il devient actif durant la traversée, nous avons comme pour le calcul de $P\{\text{Activity}_i\}$ pour $P_{d1}$ (voir [Meda09]),:

$$P\{\text{Activity}_i\} = \beta_{\text{sens}} + (1 - \beta_{\text{sens}})P\{\mathcal{E}_{\text{det}}|\bar{\mathcal{E}}_{\text{target}}, \mathcal{E}_{\text{SoT}_1}\} \cdot \tag{10}$$

où $P\{\varepsilon_{\text{det}}|\bar{\varepsilon}_{\text{target}}, \varepsilon_{\text{SoT}_1}\}$ exprime la probabilité que le noeud *i* devienne actif durant la traversée de sa zone par la cible. Pour calculer cette probabilité, on calcule la densité de probabilité jointe de la durée de la traversée notée $T_{\text{cross}}$ et du temps relatif d'arrivée de la cible après le début du cycle d'endormissement, noté $T_a$. Pour chaque noeud, cette fonction s'écrit :

$$f_{T_a, T_{cross}}(t, \tau) = f_{T_a}(t) f_{T_{cross}}(\tau) = \frac{1}{v} f_{T_a}(t) f_L(\tau) = \frac{1}{cv} f_L(\tau)$$

puisque $T_a$ est uniformément distribuée sur l'intervalle [0,$c$] où c = (1 - $\beta_{sens}$)$T_{sens}$. *Formulation de la longueur de la corde Li ou Lj*

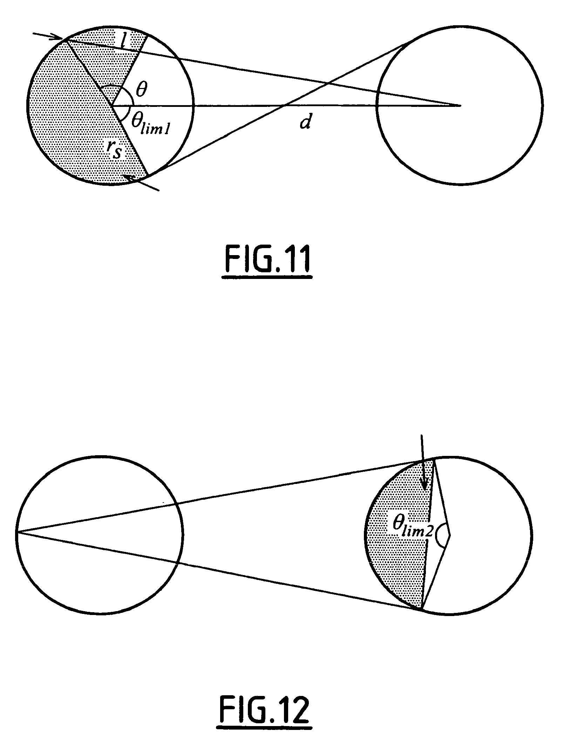

Les trajectoires prises en compte coupent à la fois les portées de *i* et de j. D'après les schémas des figures 11 et 12, l'angle pour les points d'entrée possibles dans le noeud *i* (zone orange) est de largeur [$\theta_{lim_1}$, 2$\pi$ - $\theta_{lim_1}$].

Sur la base de considérations géométriques, on obtient la longueur de la corde, notée *l,* constituant une réalisation particulière de $L_i$, en fonction de l'angle d'entrée $\theta$:

$$l = b_1 - \sqrt{r_s^2 + d^2 - 2r_s d \left[ -\sqrt{\left(1 - \frac{d\sin\theta}{b_1}\right)\left(1 - \frac{r_s\sin\theta}{b_1}\right)} + \frac{r_s d\sin^2\theta}{b_1^2} \right]} \quad (11)$$

où

$$b_1 = \sqrt{r_s^2 + d^2 - 2r_s d\cos\theta}$$

et où d s'exprime comme suit :

$$d = \begin{cases} d_{i,j}, & (i) \\ d_{i,j} + r_s & (j) \end{cases}$$

selon que l'on considère le noeud *i* ou le noeud j.

Comme l'équation (11) est assez complexe, on peut approximer *l* avec une fonction parabolique : *l* = $a_1\theta^2$ + $a_2\theta$ + $a_3$ avec $\theta$ in [$\theta_{lim_1}$, 2$\pi$ - $\theta_{lim_1}$] pour le noeud *i*, et [$\pi$ - $\theta_{lim_2}$, $\pi$ + $\theta_{lim_2}$] pour le noeud j. Les coefficients $a_1$, $a_2$ et $a_3$ sont obtenus comme dans le tableau ci-après.

| | |
|---|---|
| $a_1$ | $-\dfrac{2r_s}{(\pi - \theta_{lim})^2}$ |
| $a_2$ | $-2a_1\pi$ |
| $a_3$ | $a_1\pi^2 + 2r_s$ |

En exploitant cette approximation et en appliquant le même théorème fondamental que dans [Meda09] (équations 6 et 7), et en effectuant la substitution Y=L/v nous obtenons:

$$f_i(T_a, Y) = \frac{v}{c\sqrt{16r_s^2 - 8r_s vY}} \quad \text{si} \quad 0 < Y < \frac{2r_s}{v}$$

et 0 sinon. où *c* = (1 - $\beta_{sens}$)$T_{sens}$.

Finalement, en intégrant sur l'ensemble des réalisations de *Li* (resp. *Lj*), on montre que:

$$P\{\mathcal{E}_{\mathrm{det}}|\bar{\mathcal{E}}_{\mathrm{target}},\mathcal{E}_{\mathrm{SoT}_i}\} = P\{\mathcal{E}_{\mathrm{det}}|\bar{\mathcal{E}}_{\mathrm{target}},\mathcal{E}_{\mathrm{SoT}_j}\}$$

$$= \begin{cases} \dfrac{4r_{\mathrm{s}}}{3cv} & \text{if } 2r_{\mathrm{s}}/v < c \\ \dfrac{\frac{4r_{\mathrm{s}}}{3} - \frac{(cv+4r_{\mathrm{s}})\sqrt{16r_{\mathrm{s}}^2 - 8cr_{\mathrm{s}}v}}{12r_{\mathrm{s}}}}{cv} + \dfrac{\sqrt{16r_{\mathrm{s}}^2 - 8r_{\mathrm{s}}cv}}{4r_{\mathrm{s}}} & \\ & \text{otherwise.} \end{cases} \quad (12)$$

Ainsi, $P_{\{Activily_j\}} = P\{_{Activily_j}\}$, et on obtient finalement $P_{d2}$ en combinant les équations (8), (9), (10) et (12).

### Délai de transmission des alertes

Nous proposons un modèle analytique pour le délai de transmission d'alerte, c'est-à-dire la durée entre la détection de la présence d'un intrus par un noeud capteur et la notification de cette détection au noeud passerelle. Dans la suite, nous calculons le délai à un bond radio, noté $D_{1hop}$, puis le délai sur un chemin multi-sauts.

Pour modéliser le délai, nous considérons X-MAC, un protocole couche MAC, basse puissance et asynchrone, utilisé dans les réseaux de capteurs mettant en oeuvre des cycles d'activation pour la radio. X-MAC utilise un mécanisme d'écoute du canal à faible puissance (en anglais, Low Power Listening ou LPL) pour permettre des communications entre un émetteur et un récepteur qui ne synchronisent pas leurs programmes de réveil et d'endormissement. En effet, lorsqu'un noeud souhaite envoyer des données, il émet un préambule pendant une durée au moins aussi longue que l'intervalle de sommeil du noeud récepteur. Ceci garantit que le récepteur va se réveiller, détecter le préambule, et rester éveillé pour recevoir les données du noeud émetteur. X-MAC utilise un préambule haché avec lequel l'expéditeur alterne rapidement entre l'envoi de l'adresse de destination du paquet de donnée et un court temps d'attente. Ceci permet au destinataire d'avorter le processus afin de recevoir les données.

Le délai de transmission moyen, à un saut, peut être exprimé comme suit :

$$D_{1\,\mathrm{hop}} = \frac{(1 - \beta_{\mathrm{comm}})^2 T_{\mathrm{comm}}}{2} + S_{\mathrm{p}} + S_{\mathrm{al}} + S_{\mathrm{d}}$$

où $\beta_{comm}$ est la proportion du temps (normalisée) où le module de transmission radio est actif sur le cycle de durée $T_{comm}$, et $S_p$, $S_{al}$, $S_d$, les durées respectives de l'envoi du préambule élémentaire, de la réception de d'acquittement du préambule, et de l'envoi du paquet de données relatif à l'intrusion détectée. Si l'on considère l'état du noeud destinataire, à savoir l'état actif ou inactif de son module de communication, la probabilité qu'un noeud commence sa transmission lorsque le noeud destinataire est actif est $\beta_{comm}$ et le délai associé est $S_P + S_{al} + S_d$. À l'inverse, la probabilité qu'un noeud soit éteint est $1 - \beta_{comm}$. Nous évaluons $D_{1\,hop}$ en faisant la moyenne entre le cas le moins favorable et celui le plus favorable, en termes de délai. Le cas le plus favorable est celui où le noeud commence à émettre son préambule exactement au moment où le noeud destinataire sort de son cycle d'endormissement. Dans ce cas là, le paquet est transmis après la durée $S_p + S_{al} + S_d$. Dans le cas le moins favorable, le noeud émetteur attend pendant toute la durée d'endormissement du noeud destinataire. De plus, comme le noeud destinataire doit recevoir un préambule élémentaire entier avant d'acquitter l'envoi du paquet, le délai prend en compte que deux transmissions du préambule élémentaire peuvent être nécessaires avant le début de l'échange des données. Dans ce cas, le délai de transmission à un saut est $(1 - \beta_{comm})\, T_{comm} + (Sp + S_{al}) + S_d$. On obtient l'équation ci-dessus (1) en pondérant dans chaque équation le terme lié à l'attente avant l'envoi du préambule par la probabilité que le destinataire soit dans l'état actif ou inactif, et (2) en moyennant les cas le moins et le plus favorable.

### Modèle de consommation énergétique

Etant donné que les noeuds opèrent sur batterie, la manière dont ils consomment de l'énergie influe directement sur la durée de vie du système de surveillance. Afin d'en tenir compte, nous proposons ici un modèle d'énergie simple pour la consommation d'énergie à l'échelle du réseau de capteurs.

La consommation énergétique des noeuds peut être donnée par la somme des énergies consommées par ses composants matériel. Par souci de simplicité, nous n'intégrons dans le modèle énergétique que les contributions du module de détection et de l'émetteur-récepteur radio. Nous définissons également la durée de vie du réseau comme le temps nécessaire à ce que l'énergie moyenne résiduelle $E_r$ passe sous une valeur seuil $E_{th}$.

Pour obtenir une expression de la durée de vie du réseau, nous évaluons l'énergie consommée après un intervalle de temps donné t. $E_r$, l'énergie résiduelle moyenne à l'instant t, peut être exprimée comme suit

$$E_r(t) = NE_i - N\Omega_{tot}t$$

où Ei est l'énergie initiale d'un noeud et $\Omega_{tot}$ est la puissance requise par l'opération des modules de détection et de communication.

Selon la description du protocole X-MAC, le module de communication peut être dans l'un des quatre états suivants : (i) transmission, (ii) réception, (iii) sommeil, et (iv) LPL. Les budgets de puissance respectifs sont notés $\Omega_R$, $\Omega_T$, $\Omega_s$ et $\Omega_{LPL}$.

$\Omega_{tot}$ peut alors être calculée comme suit :

$$\Omega_{tot} = \Omega_s + \Omega_{LPL} + (\Omega_R + \Omega_T)P_d N_{target}$$

où $\Omega_R$, $\Omega_T$, $\Omega_s$ et $\Omega_{LPL}$ $\Omega_s$ sont les puissances décrits précédemment ; $P_d$ est la probabilité de détection d'une cible, et $N_{target}$ est le nombre de fois où une cible apparaît au cours d'une période de référence.

Le reste du calcul figure dans [Meda09].

On détaille ci-après la mise en oeuvre du procédé global pour l'assistance au déploiement d'un RCSD. On envisage deux types de scénarios :

- Scénario « zone simple » : dans ce cas, l'espace surveillé est par exemple une zone unique, à savoir une surface carrée au centre de laquelle est situé le camp ou bivouac à protéger.
- Scénario « zones multiples » : dans ce cas, l'espace surveillé est par exemple constitué de multiples zones autour ou aux environs du camp. Ces zones peuvent être de différentes formes (par exemple disques, patatoïdes). L'opérateur cherchera par exemple à surveiller un ensemble de zones mal couvertes par un système optronique ou radar.

### Scénario « zone simple »

Dans ce cas, on imagine par exemple que l'opérateur dispose de 20 noeuds à déployer pour la surveillance d'une surface carrée de 1000 mètres de côté. Les contraintes de performance que le système de surveillance doit remplir sont d'une part un délai D inférieur à 100ms, et d'autre part une probabilité de détection manquée, $P_{md}$, inférieure à 10%. Enfin, la présence de points de passage importants impose à l'opérateur de placer un capteur à chacun des coins de la zone.

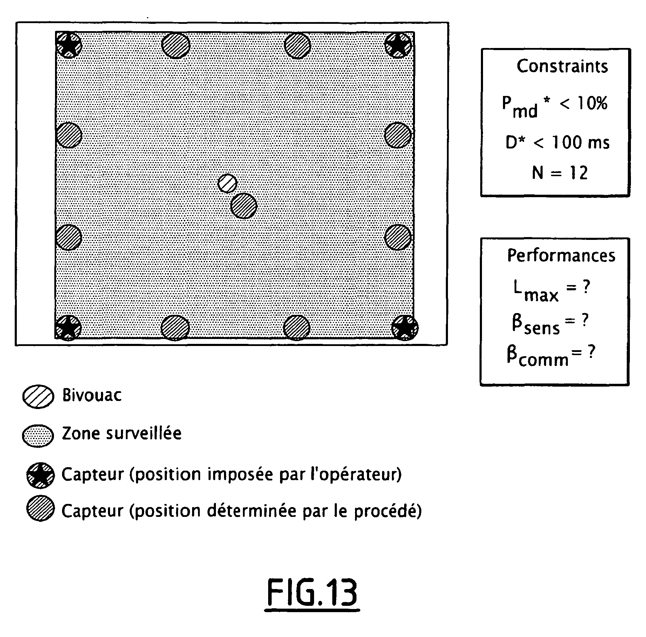

En initialisant le procédé décrit dans le document, avec 13 noeuds mis à disposition dans un premier temps ($N_0 = 4$, $N_{supp} = 9$), le procédé va ainsi suggérer à l'opérateur de positionner les noeuds comme indiqué sur la Figure 13. Au cours de son fonctionnement, le processus PROC va décrire l'espace de solutions respectant les valeurs « seuil » des contraintes.

Au vu de l'espace de solutions, la meilleure des valeurs optimales de durée de vie est de 25 jours environ, avec comme performances $P_{md} = 10\%$ et D = 100ms. Le procédé informe l'opérateur de ce point de fonctionnement optimal, ainsi que de la configuration système associée.

Avec le MODE2 et un objectif fixé par exemple à 20 jours, le processus aurait réitéré avec un nombre inférieur de noeuds à déployer. Au contraire, avec un objectif par exemple à 30 jours, le processus aurait réitéré avec un nombre supérieur de noeuds à déployer.

### Scénario « multi-zones »

Ce scénario envisage le déploiement d'un RCSD sur un ensemble de zones, sachant qu'il existe des contraintes différentes pour chacune des zones. La motivation pour un tel déploiement peut être :

- Etendre la couverture de la zone de surveillance autour du camp avec la mise en place d'un second glacis caractérisé par des contraintes moins strictes en termes de fiabilité de détection et délai

- Assurer la surveillance de zones sensibles éloignées du camp (par exemple zone 1 autour d'un col, zone 2 autour d'un point d'eau, zone 3 autour d'un centre de ravitaillement en carburant).

- Combler les diverses zones non couvertes par un système d'observation longue portée (par exemple caméra, radar).

Prenons l'exemple de l'extension de la zone de surveillance autour du camp.

- 15 noeuds à placer au maximum.

- Dans la zone 1 entourant le camp dans un rayon de 100m :

  ○ $Pmd_1 < 5\%$
  ○ $D_1 < 100ms$
  ○ Initier le processus d'optimisation sur la zone 1 avec 5 noeuds
  ○ Utiliser maximum 10 noeuds
  ○ Objectif n °1 :

    ▪ Combien de noeuds ai-je besoin pour satisfaire les contraintes ?
    ▪ Quels sont le positionnement et la configuration permettant d'atteindre la durée de vie $L_1$ égale à 50 jours ?

      ○ Appliquer $PROC_{Z1}$ en MODE2

    ▪ $PROC_{Z1}(CPC^{\star(1)}, CPO_{obj}^{(1)}, N_{supp}^{(1)}, N_{max}^{(1)}, d^{(1)}) = (POS_N^{(1)}, PF_{opt}^{(1)}, N_{req,}^{(1)}, CONF^{(1)}, MS^{(1)})$

      avec $CPC^{*(1)} = \{ Pmd_1 < 5\%, D_1 < 100ms \}$, $CPO_{obj}^{(1)} = 50$ jours

$$N_{supp}^{(1)} = 5, N_{max}^{(1)} = 10, d^{(1)} = 100m$$

- Dans la zone 2 s'étendant au delà de la zone 1, sachant le nombre de noeuds restants :

  ○ $Pmd_2 < 30\%$
  ○ $D_2 < 500ms$
  ○ Objectif n °2

    ▪ Quelle est la surface maximale de la zone 2 pour que les contraintes soient satisfaites ?
    ▪ Quels sont le positionnement et la configuration maximisant alors la durée de vie $L_2$ ?

      ○ Appliquer $PROC\_MAX\text{-}SURFACE_{Z2}$

    ▪ $PROC\_MAX\text{-}SURFACE_{Z2} \ (CPC^{\star(2)}, N_{supp}^{(2)}) = (POS_N^{(2)}, PF_{opt}^{(2)}, CONF^{(2)}, MS^{(2)})$

      avec $CPC^{*(2)} = \{ Pmd_2 < 30\%, D_2 < 500ms \}$, $N_{supp}^{(2)} = 5$

Après une 1ère itération du procédé global consistant à appliquer successivement $PROC_{Z1}$ puis $PROC\_MAX\text{-}SURFACE_{Z2}$, l'opérateur obtient par exemple les résultats suivants :

• Dans la zone 1, il existe une configuration optimale du système, satisfaisant les contraintes et permettant d'avoir une durée de vie du système égale à 50,5 jours. Il faut déposer au minimum 8 noeuds pour atteindre cette durée de vie. Le procédé présente le point de fonctionnement optimal et la configuration correspondante.

• Dans la zone 2, en utilisant 5 noeuds, la taille maximale de la zone pour que les contraintes soient respectées est de 817m. Le procédé présente le point de fonctionnement optimal et la configuration correspondante.

Au vu de ces résultats, soit l'opérateur est satisfait du déploiement et de la configuration suggérés, soit il choisit par exemple de réitérer le procédé en réallouant les 2 noeuds encore à sa disposition à la zone 2 afin d'étendre au maximum la couverture de celle-ci. Après une 2ème itération du procédé global, il obtient des résultats différents dans la 2ème zone. Par exemple, la taille maximale est alors de 1289m. Le procédé présente le point de fonctionnement optimal et la configuration correspondante.

La figure 1 présente un exemple de répartition et positionnement des noeuds fourni à la fin du procédé global sur les 2 zones pour les entrées définies précédemment.

Les avantages de ce procédé sont :

- • Sa capacité à intégrer et calculer les positions exactes des capteurs
- • La possibilité pour l'opérationnel de fonctionner de manière itérative
- • Sa capacité à relier toutes les composantes du système entre elles
- • L'assistance à l'opérationnel gérant le déploiement pour prendre les meilleures décisions possibles quant au paramétrage du système
- • Son caractère extensible dans la mesure où les modèles peuvent être changés ou étendus.

## Revendications

1. Procédé de configuration d'un réseau de capteurs sans fils déposés, constitué de noeuds interconnectés comportant chacun un capteur, une source propre d'alimentation en énergie, des moyens de calcul, des moyens de communication, des moyens de sauvegarde d'une configuration de fonctionnement et des moyens de gestion de son fonctionnement en fonction de cette configuration mémorisée, **caractérisé en ce qu'**il comporte les étapes suivantes :

   1 Définir (étape 12) des critères de performance constituant des contraintes (CPC), avec des valeurs seuil associées (CPC*), et au moins un critère de performance à optimiser (CPO), pour au moins une zone ($Z_i$) à équiper de noeuds, chaque critère de performance étant défini par un modèle

   2 Définir (étape 10) pour la ou chaque zone ($Z_i$) :

      a. Des caractéristiques (d) de la zone
      b. Des caractéristiques ($E_j$) des capteurs dans la zone

   3 Allouer (étape 10) à la ou chaque zone ($Z_i$) à équiper, un nombre de noeuds

   4 Appliquer (étape 22) un processus d'optimisation par zone sur la ou chaque zone ($Z_i$), le processus d'optimisation par zone mettant en oeuvre les étapes suivantes :

      a. Déterminer (étape 50) la position des noeuds dans la zone si il existe pour satisfaire un critère d'optimisation prédéterminé ;
      b. Déterminer (étapes 72, 80, 86) un point de fonctionnement (PF) si il existe, caractérisant le comportement du réseau de capteurs dans la zone, et
      c. Déterminer (étapes 72, 80, 86) la configuration (Conf) du réseau de capteurs dans la zone si elle existe, définissant les paramètres de configuration du réseau de capteurs, et
      d. Déterminer (étapes 66, 88) le besoin éventuel d'utiliser davantage de noeuds ou réviser les critères de performance (CPC* et CPO) définis à l'étape 1,

   5 Augmenter (16) le nombre de noeuds ou modifier (14) les critères de performance (CPC* et CPO) définis dans la ou chaque zone où les critères de performance ne sont pas satisfaits et reproduire dans ces zones le processus d'optimisation par zone avec le nouveau nombre de noeuds ou les nouveaux critères de performance (CPC* et CPO), et

   6 Appliquer la configuration déterminée à chaque noeud dans la ou chaque zone.

2. Procédé selon la revendication 1, **caractérisé en ce que** l'étape de définition des critères de performance à optimiser (CPO) comprend (étape 12) la définition d'une valeur seuil ($CPO_{obj}$) à atteindre pour au moins un critère de performance à optimiser (CPO) et **en ce que** le processus d'optimisation (étape 22) par zone comporte une étape d'incrémentions (étape 90) du nombre de noeuds pour équiper la zone, si au moins un critère de performance à optimiser (CPO) n'est pas satisfait afin de déterminer le nombre minimal de noeuds requis pour satisfaire les critères de performance (CPC* et CPO$_{obj}$) et une reproduction des étapes 4a à 4c avec le nouveau nombre de noeuds incrémenté.

**3.** Procédé selon l'une quelconque des revendications précédentes, **caractérisé en ce que** l'étape de définition des critères de performance à optimiser (CPO) comprend (étape 12) la définition d'une valeur seuil (CPO$_{obj}$) à atteindre pour au moins un critère de performance à optimiser (CPO) et **en ce que** le processus d'optimisation (étape 22) par zone comporte une étape de décrémentation (étape 96) du nombre de noeuds pour équiper la zone, si tous les critères de performance à optimiser (CPO) sont satisfaits afin de déterminer le nombre minimal de noeuds requis pour satisfaire les critères de performance (CPC* et CPO$_{obj}$) et une reproduction des étapes 4a à 4c avec le nouveau nombre de noeuds décrémenté.

**4.** Procédé selon la revendication 1, **caractérisé en ce que** l'étape de définition des caractéristiques (d) de la zone comprend la définition d'une valeur minimale pour la dimension de la zone (dmin), et **en ce que** le processus d'optimisation (étape 22) par zone (PROC_MAX-SURFACE) comporte des étapes successives d'incrémentation de la dimension de la zone et de reproduction des étapes 4a à 4c avec la nouvelle dimension de la zone, jusqu'à ce qu'il n'existe aucun point de fonctionnement satisfaisant les critères de performances contraintes constituant des contraintes (CPC*).

**5.** Procédé selon l'une quelconque des revendications précédentes, **caractérisé en ce que** le critère d'optimisation prédéterminé, pour la détermination de la position des noeuds, est de minimiser une probabilité de non détection (P$_{md}$) par le réseau sous l'hypothèse d'une activation permanente ($\beta_{sens}$ = 100%) du capteur de chaque noeud.

**6.** Procédé selon l'une quelconque des revendications précédentes, **caractérisé en ce que** l'étape d'allocation des noeuds comprend, dans au une zone (Z$_i$), la fixation de positions (POS$_{NO}$) imposées pour au moins un noeud dans la zone (Z$_i$) et l'étape (50) de détermination de la position des noeuds prend en compte les positions imposées pour au moins ledit noeud.

**7.** Procédé selon l'une quelconque des revendications précédentes, **caractérisé en ce qu'**il comporte, une modélisation analytique de la probabilité de non-détection d'une cible mettant en oeuvre les positions connues des capteurs (Calcul du Pmd).

**8.** Dispositif comportant des moyens de mise en oeuvre des étapes du procédé selon l'une quelconque des revendications précédentes.

**9.** Programme d'ordinateur comportant des instructions propres mettant en oeuvre le procédé selon l'une quelconque des revendications 1 à 7 lorsque mis en oeuvre sur ordinateur.

**Patentansprüche**

**1.** Verfahren zur Konfiguration eines Netzwerks von verteilten drahtlosen Sensoren, bestehend aus verbundenen Knoten, die jeweils einen Sensor aufweisen, einer zur Energieversorgung geeignete Quelle, Rechenmitteln, Kommunikationsmitteln, Mitteln zum Speichern einer Betriebskonfiguration und Mitteln zum Leiten seines Betriebs in Abhängigkeit dieser gespeicherten Konfiguration, dadurch charakterisiert, dass es die folgenden Schritte aufweist:

1 Definieren (Schritt 12) von Leistungskriterien, die Bedingungen (CPC) mit zugehörigen Schwellwerten (CPC*) bilden, und mindestens einem zu optimierenden Leistungskriterium (CPO) für mindestens ein mit Knoten auszustattendes Gebiet (Z$_i$), wobei jedes Leistungskriterium durch ein Modell definiert ist

2 Definieren (Schritt 10) für das oder jedes Gebiet (Z$_i$) :

    a. Eigenschaften (d) des Gebiets
    b. Eigenschaften (Ej) der Sensoren in dem Gebiet

3 Zuweisen (Schritt 10) zu dem oder jedem auszustattenden Gebiet (Z$_i$) eine Anzahl von Knoten
4 Anwenden (Schritt 22) eines Optimierungsprozesses pro Gebiet auf das oder jedes Gebiet (Z$_i$), wobei der Optimierungsprozess pro Gebiet die folgenden Schritte durchführt:

a. Ermitteln (Schritt 50) der Position der Knoten in dem Gebiet, wenn sie zum Erfüllen eines vorgegebenen Optimierungskriteriums existiert;

b. Ermitteln (Schritte 72, 80, 86) eines Arbeitspunkts (PF), wenn er existiert, der das Verhalten des Netzwerks von Sensoren in dem Gebiet charakterisiert, und

c. Ermitteln (Schritte 72, 80, 86) der Konfiguration (Conf) des Netzwerks von Sensoren in dem Gebiet, wenn sie existiert, die die Konfigurationsparameter des Netzwerks von Sensoren definiert und

d. Ermitteln (Schritte 66, 88) des möglichen Bedarfs, mehr Knoten zu verwenden oder die in Schritt 1 definierten Leistungskriterien (CPC* und CPO) zu revidieren,

5 Erhöhen (16) der Anzahl von Knoten oder Modifizieren (14) der Leistungskriterien (CPC* und CPO), die in dem oder jedem Gebiet definiert sind, wo die Leistungskriterien nicht erfüllt sind, und wiederholen in diesen Gebieten des Optimierungsprozesses pro Gebiet mit der neuen Anzahl von Knoten oder den neuen Leistungskriterien (CPC* und CPO) und

6 Anwenden der ermittelten Konfiguration auf jeden Knoten in dem oder jedem Gebiet.

2. Verfahren gemäß Anspruch 1, dadurch charakterisiert, dass der Schritt des Definierens von Leistungskriterien zum Optimieren (CPO) (Schritt 12) die Definition eines zu erreichenden Schwellwerts ($CPO_{obj}$) für mindestens ein zu optimierendes Leistungskriterium (CPO) aufweist und dadurch, dass der Optimierungsprozess (Schritt 22) pro Gebiet einen Schritt des Erhöhens (Schritt 90) der Anzahl von Knoten zum Ausstatten des Gebiets aufweist, falls mindestens ein zu optimierendes Leistungskriterium (CPO) nicht erfüllt ist, um die minimale Anzahl von Knoten zu ermitteln, die erforderlich ist, um die Leistungskriterien (CPC* und $CPO_{obj}$) zu erfüllen und ein Wiederholen der Schritte 4a bis 4c mit der erhöhten neuen Anzahl von Knoten aufweist.

3. Verfahren gemäß einem der vorhergehenden Ansprüche, dadurch charakterisiert, dass der Schritt der Definition der zu optimierenden Leistungskriterien (CPO) (Schritt 12) die Definition eines zu erreichenden Schwellwerts ($CPO_{obj}$) für mindestens ein zu optimierendes Leistungskriterium (CPO) aufweist, und dadurch, dass der Optimierungsprozess (Schritt 22) pro Gebiet einen Schritt des Verringerns (Schritt 96) der Anzahl von Knoten zum Ausstatten des Gebiets, wenn alle der zu optimierenden Leistungskriterien (CPO) erfüllt sind, um die minimale Anzahl von Knoten zu ermitteln, die erforderlich ist, um die Leistungskriterien (CPC* und $CPO_{obj}$) zu erfüllen und ein Wiederholen der Schritte 4a bis 4c mit der verringerten neuen Anzahl von Knoten aufweist.

4. Verfahren gemäß Anspruch 1, dadurch charakterisiert, dass der Schritt des Definierens der Eigenschaften (d) des Gebiets die Definition eines minimalen Werts für die Größe des Gebiets (dmin) aufweist und dadurch, dass der Optimierungsprozess (Schritt 22) pro Gebiet (PROC_MAX-SURFACE) aufeinanderfolgende Schritte der Erhöhung der Größe des Gebiets und der Wiederholung der Schritte 4a bis 4c mit der neuen Größe des Gebiets aufweist, bis es überhaupt keinen Arbeitspunkt gibt, der die Bedingungs-Leistungskriterien, die Bedingungen bilden (CPC*), erfüllt.

5. Verfahren gemäß einem der vorhergehenden Ansprüche, dadurch charakterisiert, dass das vorgegebene Optimierungskriterium zum Ermitteln der Position der Knoten ist, eine Wahrscheinlichkeit der Nicht-Detektion ($P_{md}$) durch das Netzwerk unter der Hypothese einer permanenten Aktivierung ($\beta_{sens}$ = 100%) des Sensors jedes Knotens zu minimieren.

6. Verfahren gemäß einem der vorhergehenden Ansprüche, dadurch charakterisiert, dass der Schritt des Zuweisens der Knoten in mindestens einem Gebiet ($Z_i$) das Festlegen der Positionen ($POS_{NO}$), die für mindestens einen Knoten in dem Gebiet ($Z_i$) vorgeschrieben sind, und dass der Schritt (50) des Ermittelns der Position der Knoten die für mindestens einen der Knoten vorgeschriebenen Positionen berücksichtigt.

7. Verfahren gemäß einem der vorhergehenden Ansprüche, dadurch charakterisiert, dass es eine analytische Modellierung der Wahrscheinlichkeit der Nicht-Detektion eines Ziels unter Anwendung der bekannten Positionen der Sensoren (Berechnung von Pmd) aufweist.

8. Vorrichtung aufweisend Mittel zum Durchführen der Schritte des Verfahrens gemäß einem der vorhergehenden Ansprüche.

9. Computerprogramm aufweisend Instruktionen, die dazu geeignet sind, ein Verfahren gemäß einem der Ansprüche 1 bis 7 auszuführen, wenn sie von einem Computer ausgeführt werden.

**Claims**

1. A method for configuring a wireless network of Unattended Ground Sensors (UGS), consisting of interconnected nodes each including a sensing module, an own power supply, computing means, communication means, means for saving an operating configuration and means for managing its operation according to this configuration stored in memory, **characterized in that** it includes the following steps:

> 1 Defining (step 12) performance criteria forming constraints (CPC), with associated threshold values (CPC*), and at least one performance criterion to be optimized (CPO), for at least one zone ($Z_i$) to be equipped with nodes, each performance criterion being defined by a model
> 2 Defining (step 10) for said or each zone ($Z_i$):
>
> > a. Characteristics (d) of the zone
> > b. Characteristics ($E_j$) of the sensors in the zone
>
> 3 Allocating (step 10) to said or each zone ($Z_i$) to be equipped, a number of nodes
> 4 Applying (step 22) an optimization process per zone on said or each zone ($Z_i$), the optimization process per zone applying the following steps:
>
> > a. Determining (step 50) the position of the nodes in the zone if it exists for meeting a predetermined optimization criterion;
> > b. Determining (steps 72, 80, 86) an operating point (PF) if it exists, characterizing the behavior of the network of sensors in the zone, and
> > c. Determining (steps 72, 80, 86) the configuration (Conf) of the network of sensors in the zone if it exists, defining the configuration parameters of the network of sensors, and
> > d. Determining (steps 66, 88) the possible need of using more nodes or revising the performance criteria (CPC* and CPO) defined in step 1,
>
> 5 Increasing (16) the number of nodes or modifying (14) the performance criteria (CPC* and CPO) defined in said or each zone where the performance criteria are not met and reproducing in these zones the optimization process per zone with the new number of nodes or the new performance criteria (CPC* and CPO), and
> 6 Applying the configuration determined at each node in said or each zone.

2. The method according to claim 1, **characterized in that** the step for defining the performance criteria to be optimized (CPO) comprises (step 12) the definition of a threshold value ($CPO_{obj}$) to be attained for at least one performance criterion to be optimized (CPO), and **in that** the optimization process (step 22) per zone includes a step (step 90) for incrementing the number of nodes for equipping the zone, if at least one performance criterion to be optimized (CPO) is not met in order to determine the minimum number of nodes required for meeting the performance criteria (CPC* and $CPO_{obj}$) and a reproduction of the steps 4a to 4c with the incremented new number of nodes.

3. The method according to any of the preceding claims, **characterized in that** the step for defining the performance criteria to be optimized (CPO) comprises (step 12) the definition of a threshold value ($CPO_{obj}$) to be attained for at least one performance criterion to be optimized (CPO), and **in that** the optimization process (step 22) per zone includes a step (step 96) for decrementing the number of nodes for equipping the zone, if all the performance criteria to be optimized (CPO) are met in order to determine the minimum number of nodes required for meeting the performance criteria (CPC* and $CPO_{obj}$) and a reproduction of the steps 4a to 4c with the decremented new number of nodes.

4. The method according to claim 1, **characterized in that** the step for defining the characteristics (d) of the zone comprises the definition of a minimum value for the dimension of the zone (dmin), and **in that** the optimization process (step 22) per zone (PROC_MAX-SURFACE) includes successive steps for incrementing the dimension of the zone and for reproducing the steps 4a to 4c with the new dimension of the zone, until there exists no operating point meeting the performance criteria forming constraints (CPC*).

5. The method according to any of the preceding claims, **characterized in that** the predetermined optimization criterion, for determining the position of the nodes is to minimize a non-detection probability ($P_{md}$) by the network under the assumption of permanent activation ($\beta_{sens} = 100\%$) of the sensor of each node.

6. The method according to any of the preceding claims, **characterized in that** the step for allocating the nodes comprises in at least one zone ($Z_i$), the setting of imposed positions ($POS_{NO}$) for at least one node in the zone ($Z_i$) and the step (50) for determining the position of the nodes takes into account the positions imposed for at least said node.

7. The method according to any of the preceding claims, **characterized in that** it includes analytical modeling of the non-detection probability of a target applying the known positions of the sensors (calculation of Pmd).

8. A device including means for applying the steps of the method according to any of the preceding claims.

9. A computer program including specific instructions for applying the method according to any of claims 1 to 7, when applied on a computer.

**FIG.1**

**FIG.2**

**FIG.3**

*1ère itération de*
*PROC_GLOBAL*

*La Zone Z1 permet de*
*réallouer 5 noeuds.*

*Il faut allouer davantage de*
*noeuds ou relâcher les*
*contraintes sur Z2 et Z3.*

$Z_1$
$d_1=1000m$
$Pmd_1*=10\%$
$D_1*=100ms$
$Max\ (L_1)\ t.q.\ L_1>30j$
$N_{supp}=7$
$N_{max}=10$

$\downarrow PROC_{Z1}$

SUCCES_CPO-OBJECTIF-ATTEINT-MIN-NOEUDS

$Pmd_1=10\%,\ D_1=100ms,\ L_{OPT1}=31\ Jours,$

$N_{req}=2$

$Z_2$
$d_1=500m$
$Pmd_2*=1\%$
$Min(D_2)$
$POS_{NO=2}$
$N_{supp}=5$

$\downarrow PROC_{Z2}$

ECHEC_CONTRAINTES-IRREALISABLES

$Z_3$
$d_3=250m$
$L_3*=50\ j$
$D_3*=150ms$
$Min(Pmd_3)t.q.Pmd_3<10\%$
$N_{supp}=5$
$N_{max}=8$

$\downarrow PROC_{Z3}$

ECHEC_CPO-OBJECTIF-INATTEIGNABLE

$L_3=51j,\ D_3=151ms,\ Pmd_{OPT3}=12\%,$

$N_{req}=8$

*2ième itération de*
*PROC_GLOBAL*

*L'utilisateur choisit de relaxer la*
*contrainte dans Z2 et d'allouer 5*
*noeuds supplémentaires à Z3.*

$Z_2$
$d_1=500m$
$Pmd_2*=10\%$
$Min(D_2)$
$POS_{NO=3}$
$N_{supp}=5$

$\downarrow PROC_{Z2}$

SUCCES_PAS-DE-CPO-OBJECTIF-DEFINI

$Pmd_2=10\%,\ L_{OPT1}=115\ Jours,\ D_1=54ms,\ N_{req}=8$

$Z_3$
$d_3=250m$
$L_3*=50\ j$
$D_3*=150ms$
$Min(Pmd_3)t.q.Pmd_3<10\%$
$N_{supp}=10$
$N_{max}=8$

$\downarrow PROC_{Z3}$

SUCCES_CPO-OBJECTIF-ATTEINT-MIN-NOEUDS

$L_3=51j,\ D_3=151ms,\ Pmd_{OPT3}=15\%, N_{req}=15$

**FIG.4**

## FIG.5

Détermination des positions $POS_N^{(i)}$
pour maximiser $P_{md}$ avec $B_{sens\ max}$
$POS_N = F_{POS}(POS_{NO}, N_{SUPP}, d)$ — 50

Détermination espace des solutions $E_{CPC^*, CPO}$ — 52

64

66

$E_{CPC^*, CPO}$ vide ? — oui → Info opérateur → RETOUR = ECHEC_CONTRAINTES-IRRÉALISABLES

62 — non

68

Déterminer $CPO_{Perf}$ - par exemple L

72

74

mode 1 ou 2 ? — mode 1 → PF + config $N_{SUPP} + N_O$ → RETOUR = SUCCES-PAS-DE-CPO OBJECTIF-DEFINI

70

76   78   80

mode 2

$CPO_{Perf} = CPO_{Obj}$ ? — non → $CPO\_OK$ ? — vrai → PF + config $N_{SUPP} + N_O$

oui

faux ou null

82

RETOUR = SUCCES_CPO OBJECTIF-ATTEINT-MIN-NOEUDS

92

$CPO\_OK$ ? — faux

vrai ou null

$CPO\_OK = FAUX$

83

93 — $CPO\_OK = VRAI$

84

94

$N_{SUPP} = N_{MAX}$ ? — oui → PF + config $N_{SUPP} + N_O$

$N_{SUPP} + N_O > 1$ ? — non

86

non

88

oui

RETOUR = ECHEC_CPO OBJECTIF-INATTEIGNABLE

96 — $N_{SUPP} := N_{SUPP} - 1$

90

60

$N_{SUPP} := N_{SUPP} + 1$

FIG.6

$Z_1$
$d_1 = 500m$
$Pmd_1 * = 5\%$
$D_1 * = 150ms$
$Max (L_1)$
$POS_{NO=3}$
$N_{supp} = 4$

$PROC_{Z1}$

ECHEC_CONTRAINTES-IRREALISABLES

ou

SUCCES_PAS-DE-CPO-OBJECTIF

$Pmd_1 = 5\%$, $D_1 = 150ms$, $L_{OPT1} = 13$ Jours, $\beta_{sens} = 5\%$, $\beta_{com} = 11\%$, $N_{req} = 7$

$Z_2$
$d_2 = 1000m$
$Pmd_2 * = 10\%$
$D_2 * = 100ms$
$Max (L_2)$ t.q. $L_1 > 30j$
$N_{supp} = 4$
$N_{max} = 10$

$PROC_{Z1}$

ECHEC_CONTRAINTES-IRREALISABLES

ou

ECHEC_CPO-OBJECTIF-INATTEIGNABLE

$Pmd_2 = 10\%$, $D_2 = 150ms$, $L_{OPT2} = 22$ Jours, $\beta_{sens} = 21\%$, $\beta_{com} = 16\%$, $N_{req} = 14$

ou

SUCCES_CPO-OBJECTIF-ATTEINT-MIN-NOEUDS

$Pmd_2 = 10\%$, $D_2 = 150ms$, $L_{OPT2} = 31$ Jours, $\beta_{sens} = 3\%$, $\beta_{com} = 8\%$, $N_{req} = 2$

## FIG.7

EP 2 384 082 B1

## FIG.8

$$\beta_{sens}T_{sens} \quad (1 - \beta_{sens})T_{sens}$$

$$T_{sens}$$

## FIG.9

$L_{in}$

$r_s$

$d_{i,j}$

$L_{out}$

## FIG.10

## FIG.11

## FIG.12

Constraints

$P_{md}^{*} < 10\%$

$D^{*} < 100$ ms

$N = 12$

Performances

$L_{max} = ?$

$\beta_{sens} = ?$

$\beta_{comm} = ?$

Bivouac

Zone surveillée

Capteur (position imposée par l'opérateur)

Capteur (position déterminée par le procédé)

## FIG.13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DANS T. HE ; S. KRISHNAMURTHY ; L. LUO ; T. YAN ; L. GU ; R. STOLERU ; G. ZHOU ; Q. CAO ; P. VICAIRE ; J. A. STANKOVIC.** Vigilnet: An integrated sensor network system for energy-efficient surveillance. *ACM Trans. Sen. Netw.,* Février 2006, vol. 2 (1), 1-38
- **J. JEONG ; Y. GU ; T. HE ; D. DU.** VISA: Virtual Scanning Algorithm for Dynamic Protection of Road Networks. *Proc. of 28th IEEE Conférence on Computer Communications (INFOCOM 09),* Avril 2009
- **L. LAZOS ; R. POOVENDRAN ; J. A. RITCEY.** Analytic evaluation of target détection in heterogeneous wireless sensor networks. *ACM Trans. Sensor Networks,* Mars 2009, vol. 5 (2), 1-38
- **P. MEDAGLIANI ; J. LEGUAY ; V. GAY ; M. LOPEZ RAMOS ; G. FERRARI.** Engineering Energy-Efficient Target Detection Applications in Wireless Sensor Networks. *Conference IEEE Percom.,* Mars 2010
- **DANS J.J. SYLVESTER.** On a funicular solution of Buffon's ''problem of the needle'' in its most general form. *Acta Mathematica,* 1890, vol. 14 (1), 185-205
- **L. LAZOS ; R. POOVENDRAN ; J. A. RITCEY.** Analytic evaluation of target detection in heterogeneous wireless sensor networks. *ACM Trans. Sensor Networks,* Mars 2009, vol. 5 (2), 1-38